# EUROPEAN PATENT APPLICATION

(11) **EP 4 845 219 A1**
(43) Date of publication of application: **25.11.2026**
(21) Application number: 25751179.0
(22) Date of filing: 21.01.2025
(51) Int. Cl.: H04W 36/00

(54) **COMMUNICATION METHOD AND COMMUNICATION APPARATUS**

(30) Priority: 07.02.2024 CN 202410176151
(71) Applicant: Huawei Technologies Co., Ltd., Shenzhen, Guangdong 518129 (CN)
(72) Inventor: YOU, Chunhua, Shenzhen, Guangdong 518129 (CN); GU, Zhifang, Shenzhen, Guangdong 518129 (CN); FAN, Qiang, Shenzhen, Guangdong 518129 (CN)
(74) Representative: Huawei European IPR
(86) International application number: PCT/CN2025/073554
(87) International publication number: WO 2025/167577

(57) **Abstract**

A communication method and a communication apparatus are provided. The method is applied to an LTM switching scenario. The method includes: A first node sends a first message to a second node, where the first message is used to request to add the second node as a candidate secondary node of a terminal, the first message includes first identification information, and the first identification information is used to request an early synchronization configuration from the second node; and the first node receives a second message from the second node, where the second message is used to acknowledge addition of the second node as the candidate secondary node of the terminal, the second message includes a first early synchronization configuration, and the first early synchronization configuration corresponds to the first identification information. In this method, the terminal implements cross-node cell switching based on early synchronization, thereby reducing switching latency.

## Description

This application claims priority to Chinese Patent Application No. 202410176151.6, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In 5th generation (5th generation, 5G) communication technologies, mobility of a terminal triggers cell switching. For example, before signal quality of a serving cell of the terminal becomes poor or even before normal communication cannot be performed, the terminal may switch to a neighboring cell with better signal quality, so that continuous communication services are provided to the terminal.

In a 5G radio access network (radio access network, RAN) architecture, a base station includes a distributed unit (distributed unit, DU) and a central unit (central unit, CU). For example, in layer 1/layer 2 triggered mobility (layer 1/layer 2 triggered mobility, LTM) switching, a terminal supports mobility from one DU to another DU managed by a same CU, to complete intra-base station cell switching. In this way, service drops or service interruption caused by deterioration of signal quality of a serving cell of the terminal can be avoided. However, existing LTM switching scenarios do not involve a solution for cell switching of a terminal between base stations.

### SUMMARY

This application provides a communication method and a communication apparatus, so that a terminal implements cell switching between base stations in an LTM switching scenario, thereby reducing switching latency.

According to a first aspect, a communication method is provided. The method is performed by a first node, or may be performed by another entity. This is not limited in this application. For ease of description, the following uses an example in which the method is performed by the first node for description. The first node may be a network device in a dual connectivity (dual connectivity, DC) scenario, for example, a master node (master node, MN), a chip or a circuit in the MN, or a functional module that can invoke and execute a program in the MN. The method is applied to an LTM switching scenario.

The method includes: sending a first message to a second node, where the first message is used to request to add the second node as a candidate secondary node of a terminal, the first message includes first identification information, and the first identification information is used to request an early synchronization configuration from the second node; and receiving a second message from the second node, where the second message is used to acknowledge addition of the second node as the candidate secondary node of the terminal, the second message includes a first early synchronization configuration, and the first early synchronization configuration corresponds to the first identification information.

According to the foregoing solution, the first node sends the first identification information to the second node, to obtain the first early synchronization configuration, so that the terminal and the second node implement early synchronization in the LTM switching scenario. In this case, the terminal in the dual connectivity scenario is separately connected to the first node and the second node, and the terminal has completed an early synchronization procedure with the second node before receiving a cell switch command. In this way, after subsequently receiving the cell switch command, the terminal may access the second node in a random access-less manner, thereby reducing switching latency of a primary secondary cell of the terminal, avoiding service drops or service interruption, and ensuring service experience of users.

It should be understood that the early synchronization is a synchronization procedure performed by the terminal before receiving the switch command.

For example, the first early synchronization configuration includes a random access preamble index and/or a random access time-frequency resource. It should be understood that the first early synchronization configuration is a configuration of a first cell, the first cell belongs to the second node, the first cell is a candidate primary secondary cell accepted by the second node, and the first early synchronization configuration indicates a random access resource. The terminal may complete early synchronization for the first cell by using the random access resource, and access the first cell in a random access-less manner after subsequently receiving the switch command.

It should be understood that, that the first early synchronization configuration corresponds to the first identification information may be understood as: The first identification information is used to request the second node to provide the early synchronization configuration, and the second node provides the first early synchronization configuration of the first cell to the first node based on the first identification information. That is, the early synchronization for the first cell may be performed based on the first early synchronization configuration.

In some implementations of the first aspect, the sending the first message to the second node includes: receiving a third message from a third node, where the third message includes an identifier of the second node and the first identification information, and the third node is a secondary node that currently serves the terminal; and sending the first message to the second node in response to the third message.

It may be understood that the third message may be considered as a trigger condition for sending the first message by the first node to the second node.

Based on the foregoing solution, the first node may request, based on the identifier of the second node carried in the third message, the second node to be added as the candidate secondary node of the terminal, and the second node subsequently may allocate, based on the first identification information carried in the third message, the corresponding first early synchronization configuration for the subsequent early synchronization between the terminal and the second node for the first cell, so that the terminal may access the first cell in a random access-less manner, thereby reducing switching latency of a primary secondary cell of the terminal, and improving service experience of users.

In some implementations of the first aspect, the first message further includes first indication information, and the first indication information is used to request, for LTM, to add the second node as the candidate secondary node of the terminal.

Based on the foregoing solution, the first indication information is sent, so that the second node may determine, based on the first indication information, whether to accept adding the second node as the candidate secondary node of the terminal for LTM. When the second node agrees to serve as the candidate secondary node of the terminal, it means that the terminal subsequently may implement cell switching between base stations in the LTM switching scenario, and the terminal may communicate with the second node.

In some implementations of the first aspect, the first message further includes identification information of K recommended (or suggested) cells, the K cells include the first cell, K is an integer greater than or equal to 1, and the first cell belongs to the second node.

It may be understood that the K recommended cells belong to the second node, and signal quality of the K recommended cells is usually good. For example, the signal quality of the K cells is greater than or equal to a first threshold. The K cells include the first cell.

Based on the foregoing solution, the second node receives the identification information of the K recommended cells, and determines whether to accept the K cells recommended by the first node as cells of the terminal. For example, the second node may select a cell with better quality from the K cells as a target cell of the terminal, that is, the first cell. In other words, the second node accepts that the primary secondary cell of the terminal is the first cell, and selects the first cell with better signal quality as the target cell of the terminal, helping improve communication quality and ensure user experience.

In some implementations of the first aspect, the third message further includes second indication information, and the second indication information is used to trigger, for LTM, the first node to request to add the second node as the candidate secondary node of the terminal.

Based on the foregoing solution, the second indication information is sent to trigger the first node to request to add the second node as the candidate secondary node of the terminal. When the second node agrees to serve as the candidate secondary node of the terminal, it means that the terminal subsequently may implement cell switching between base stations in the LTM switching scenario, and the terminal may communicate with the second node.

In some implementations of the first aspect, the third message further includes the identification information of the K cells.

Based on the foregoing solution, the third node may recommend or suggest the K cells to the first node, so that the terminal can switch to the cells when quality of a current serving cell of the terminal becomes poor or when signal quality of the terminal in the cells is better, helping improve communication quality and ensuring service experience of users.

In some implementations of the first aspect, the method further includes: sending a fourth message to the third node, where the fourth message includes the first early synchronization configuration, and the third node is the secondary node that currently serves the terminal.

Based on the foregoing solution, the first node may send the first early synchronization configuration to the third node, and further, the third node may indicate, based on the first early synchronization configuration and via the second cell, the terminal to initiate early synchronization for the first cell, where the second cell belongs to the third node. In this way, after an early synchronization procedure for the first cell is performed, the terminal may access the second node in a random access-less manner based on a received cell switch command, thereby reducing the switching latency of the primary secondary cell of the terminal, avoiding service drops or service interruption, and ensuring service experience of users.

In some implementations of the first aspect, the method further includes: receiving a fifth message from the second node, where the fifth message includes a timing advance TA of a first cell, an identifier of the third node, and the first identification information, the first cell belongs to the second node, and the third node is the secondary node that currently serves the terminal.

It should be understood that, the TA of the first cell is determined by the second node based on a random access preamble from the terminal in an early synchronization procedure (or a random access procedure) for the first cell.

In some implementations of the first aspect, the method further includes: sending a sixth message to the third node in response to the fifth message, where the sixth message includes the TA of the first cell and the first identification information.

For example, the first node may forward the TA of the first cell and a first identifier, that is, the sixth message, to the third node based on the identifier of the third node in the fifth message.

Based on the foregoing solution, the third node obtains the sixth message, determines the corresponding first early synchronization configuration based on the first identification information in the sixth message, determines, based on a correspondence between the random access preamble included in the first early synchronization configuration and the terminal, that the TA of the first cell is associated with the terminal, and therefore may send the TA of the first cell to the terminal. In this case, after subsequently receiving a switch command, the terminal may access the first cell in a random access-less manner based on the TA of the first cell, that is, switch a primary secondary cell of the terminal to the first cell, thereby avoiding cell switching latency, avoiding interruption of service data, and improving service experience of users.

In some implementations of the first aspect, the method further includes: receiving a seventh message from the third node, where the seventh message indicates that a switch command has been sent to the terminal, the switch command instructs to switch a primary secondary cell of the terminal to the first cell, and the seventh message includes the identifier of the second node and identification information of the first cell.

Based on the foregoing solution, the first node may determine, based on the received seventh message, that the third node has sent the switch command to the terminal, and the first node may indicate, based on the identifier of the second node carried in the seventh message, to the second node that the switch command has been sent to the terminal, so that the second node monitors and ensures that the terminal successfully switches to the first cell, thereby implementing cross-node cell switching, reducing switching latency, and improving user experience.

In some implementations of the first aspect, the method further includes: sending an eighth message to the second node in response to the seventh message, where the eighth message indicates that the switch command has been sent to the terminal, and the eighth message includes the identification information of the first cell.

Based on the foregoing solution, the second node may determine, based on the received eighth message, that the switch command has been sent to the terminal, the second node may determine, based on an identity of the first cell, that the terminal is to switch to the first cell, and the second node may further monitor the first cell and implement that the primary secondary cell of the terminal is successfully switched to the first cell, thereby implementing cross-node cell switching, reducing switching latency, and improving user experience.

In some implementations of the first aspect, the second message further includes a second early synchronization configuration, the fourth message further includes the second early synchronization configuration, and the method further includes: receiving a ninth message from the third node, where the ninth message includes the encapsulated second early synchronization configuration; and sending a tenth message to the terminal in response to the ninth message, where the tenth message includes the encapsulated second early synchronization configuration, the first early synchronization configuration and the encapsulated second early synchronization configuration are used for early synchronization for the first cell, and the first cell belongs to the second node.

In some implementations of the first aspect, the first message further includes second identification information, the second identification information is used to request an early synchronization configuration from the second node, the second message further includes a third early synchronization configuration, and the third early synchronization configuration corresponds to the second identification information.

Based on the foregoing solution, a quantity of pieces of identification information carried in the first message is not limited in this application, and correspondingly, a quantity of early synchronization configurations carried in the second message is also not limited in this application, provided that there is a correspondence between the identification information and the early synchronization configurations. In this way, the terminal may perform early synchronization with the second node for different cells, thereby reducing switching latency of a primary secondary cell of the terminal, and ensuring service communication quality and user experience.

According to a second aspect, a communication method is provided. The method is performed by a second node, or may be performed by another entity. This is not limited in this application. For ease of description, the following uses an example in which the method is performed by the second node for description. The second node may be a network device in a dual connectivity (dual connectivity, DC) scenario, for example, a candidate secondary node (secondary node, SN), a chip or a circuit in the candidate SN, or a functional module that can invoke and execute a program in the candidate SN. The method is applied to an LTM switching scenario.

The method includes: receiving a first message from a first node, where the first message is used to request to add the second node as a candidate secondary node of a terminal, the first message includes first identification information, and the first identification information is used to request an early synchronization configuration; and sending a second message to the first node, where the second message is used to acknowledge addition of the second node as the candidate secondary node of the terminal, the second message includes a first early synchronization configuration, and the first early synchronization configuration corresponds to the first identification information.

According to the foregoing solution, the second node receives the first identification information sent from the first node, to allocate the first early synchronization configuration, so that the terminal and the second node implement early synchronization in the LTM switching scenario. In this case, the terminal in the dual connectivity scenario is separately connected to the first node and the second node, and the terminal has completed an early synchronization procedure with the second node before receiving a cell switch command. In this way, after subsequently receiving the cell switch command, the terminal may access the second node in a random access-less manner, thereby reducing switching latency of a primary secondary cell of the terminal, avoiding service drops or service interruption, and ensuring service experience of users.

In some implementations of the second aspect, the method further includes: sending a fifth message to the first node, where the fifth message includes a timing advance TA of a first cell, an identifier of a third node, and the first identification information, the first cell belongs to the second node, and the TA is determined in an early synchronization procedure for the first cell.

In some implementations of the second aspect, the method further includes: receiving an eighth message from the first node, where the eighth message indicates that a switch command has been sent to the terminal, the switch command instructs to switch a primary secondary cell of the terminal to the first cell, and the eighth message includes identification information of the first cell.

In some implementations of the second aspect, the first early synchronization configuration includes a random access preamble index and/or a random access time-frequency resource.

In some implementations of the second aspect, the first message further includes first indication information, and the first indication information is used to request, for LTM, to add the second node as the candidate secondary node of the terminal.

In some implementations of the second aspect, the first message further includes identification information of K recommended cells, the K cells include the first cell, the first cell belongs to the second node, and K is an integer greater than or equal to 1. In some implementations of the second aspect, the first message further includes second identification information, the second identification information is used to request an early synchronization configuration from the second node, the second message further includes a third early synchronization configuration, and the third early synchronization configuration corresponds to the second identification information.

For beneficial effects of the second aspect and some implementations of the second aspect, correspondingly refer to descriptions of the first aspect and related implementations of the first aspect. Details are not described herein again.

According to a third aspect, a communication method is provided. The method is performed by a third node, or may be performed by another entity. This is not limited in this application. For ease of description, the following uses an example in which the method is performed by the third node for description. The third node is a secondary node that currently serves a terminal. The third node may be a network device in a dual connectivity (dual connectivity, DC) scenario, for example, a source secondary node (secondary node, SN), a chip or a circuit in the source SN, or a functional module that can invoke and execute a program in the source SN. The method is applied to an LTM switching scenario.

The method includes: determining a third message, where the third message includes an identifier of a second node and first identification information, and the third message is used to trigger a first node to request, from the second node, an early synchronization configuration for the first identification information; and sending the third message to the first node.

According to the foregoing solution, the third node may allocate the first identification information to the first node, and the first identification information is used by the first node to request the second node to configure a first early synchronization configuration corresponding to the first identification information, so that the terminal and the second node implement early synchronization in the LTM switching scenario. In addition, the terminal has completed an early synchronization procedure with the second node before receiving a cell switch command. In this way, after subsequently receiving the cell switch command, the terminal may access the second node in a random access-less manner, thereby reducing switching latency of a primary secondary cell of the terminal, avoiding service drops or service interruption, and ensuring service experience of users.

In some implementations of the third aspect, the method further includes: receiving a fourth message from the first node, where the fourth message includes a first early synchronization configuration, and the first early synchronization configuration corresponds to the first identification information; and indicating, based on the first early synchronization configuration and via a second cell, the terminal to initiate early synchronization for a first cell, where the first early synchronization configuration is a configuration of the first cell, the first cell belongs to the second node, and the second cell belongs to the third node.

In some implementations of the third aspect, the first early synchronization configuration is associated with the second cell.

Based on the foregoing solution, the third node may determine the second cell based on the first early synchronization configuration carried in the fourth message, and initiate early synchronization to the terminal via the second cell, so that the terminal and the second node may perform early synchronization for the first cell. In this way, after subsequently receiving a switch command, the terminal may access the first cell in a random access-less manner, thereby implementing cell switching of the terminal between base stations in the LTM switching scenario, reducing cell switching latency, and ensuring service experience of users.

In some implementations of the third aspect, the fourth message further includes a second early synchronization configuration, and the method further includes: sending a ninth message to the first node in response to the fourth message, where the ninth message includes the encapsulated second early synchronization configuration, and the encapsulated second early synchronization configuration is used for the early synchronization for the first cell.

In some implementations of the third aspect, the method further includes: receiving a sixth message from the first node, where the sixth message includes a timing advance TA of the first cell and the first identification information.

In some implementations of the third aspect, the method further includes: determining, based on the sixth message, that the TA of the first cell is associated with the terminal; and sending a switch command to the terminal, where the switch command instructs to switch a primary secondary cell of the terminal to the first cell, and the switch command includes the TA of the first cell.

In some implementations of the third aspect, the method further includes: sending a seventh message to the first node, where the seventh message indicates that the switch command has been sent to the terminal, and the seventh message includes the identifier of the second node and identification information of the first cell.

In some implementations of the third aspect, the third message further includes second indication information, and the second indication information is used to trigger, for LTM, the first node to request to add the second node as the candidate secondary node of the terminal.

In some implementations of the third aspect, the third message further includes identification information of K recommended cells, the K cells include the first cell, the first cell belongs to the second node, and K is an integer greater than or equal to 1.

For beneficial effects of the third aspect and some implementations of the third aspect, correspondingly refer to descriptions of the first aspect and related implementations of the first aspect. Details are not described herein again.

According to a fourth aspect, a communication apparatus is provided. The communication apparatus has a function of implementing the first aspect. For example, the communication apparatus includes a corresponding module, unit, or means (means) for performing operations in the first aspect. The module, unit, or means may be specifically implemented by using software, or may be implemented by using hardware, or may be implemented by using software in combination with hardware.

In a possible design, the communication apparatus includes: a transceiver unit, configured to send a first message to a second node, where the first message is used to request to add the second node as a candidate secondary node of a terminal, the first message includes first identification information, and the first identification information is used to request an early synchronization configuration from the second node; and the transceiver unit is further configured to receive a second message from the second node, where the second message is used to acknowledge addition of the second node as the candidate secondary node of the terminal, the second message includes a first early synchronization configuration, and the first early synchronization configuration corresponds to the first identification information.

The transceiver unit may perform receiving and sending processing in the first aspect, the communication apparatus further includes a processing unit, and the processing unit may perform processing other than receiving and sending in the first aspect.

For example, the communication apparatus may be an MN in a DC scenario, a chip or a circuit in the MN, a functional module that can invoke and execute a program in the MN, or the like.

According to a fifth aspect, a communication apparatus is provided. The communication apparatus has a function of implementing the second aspect. For example, the communication apparatus includes a corresponding module, unit, or means (means) for performing operations in the first aspect. The module, unit, or means may be specifically implemented by using software, or may be implemented by using hardware, or may be implemented by using software in combination with hardware.

In a possible design, the communication apparatus includes: a transceiver unit, configured to receive a first message from a first node, where the first message is used to request to add a second node as a candidate secondary node of a terminal, the first message includes first identification information, and the first identification information is used to request an early synchronization configuration; and the transceiver unit is further configured to send a second message to the first node, where the second message is used to acknowledge addition of the second node as the candidate secondary node of the terminal, the second message includes a first early synchronization configuration, and the first early synchronization configuration corresponds to the first identification information.

The transceiver unit may perform receiving and sending processing in the second aspect, the communication apparatus further includes a processing unit, and the processing unit may perform processing other than receiving and sending in the second aspect.

For example, the communication apparatus may be a candidate SN in a DC scenario, a chip or a circuit in the candidate SN, a functional module that can invoke and execute a program in the candidate SN, or the like.

According to a sixth aspect, a communication apparatus is provided. The communication apparatus has a function of implementing the third aspect. For example, the communication apparatus includes a corresponding module, unit, or means (means) for performing operations in the first aspect. The module, unit, or means may be specifically implemented by using software, or may be implemented by using hardware, or may be implemented by using software in combination with hardware.

In a possible design, the communication apparatus includes: a processing unit, configured to determine a third message, where the third message includes an identifier of a second node and first identification information, and the third message is used to trigger a first node to request, from the second node, an early synchronization configuration for the first identification information; and a transceiver unit, configured to send the third message to the first node.

The transceiver unit may perform receiving and sending processing in the third aspect, and the processing unit may perform processing other than receiving and sending in the third aspect.

For example, the communication apparatus may be a source SN in a DC scenario, a chip or a circuit in the source SN, a functional module that can invoke and execute a program in the source SN, or the like.

According to a seventh aspect, a communication apparatus is provided. The communication apparatus may be the first communication apparatus or the second communication apparatus. The communication apparatus includes a transceiver, a processor, and a memory. The processor is configured to control the transceiver to send and receive a signal. The memory is configured to store a computer program. The processor is configured to invoke the computer program from the memory and run the computer program, so that the communication apparatus performs the method according to any possible implementation of the first aspect to the third aspect.

Optionally, there are one or more processors, and there are one or more memories.

Optionally, the memory and the processor may be integrated together, or the memory and the processor may be separately disposed.

Optionally, the communication apparatus further includes a transmitter machine (transmitter) and a receiver machine (receiver).

According to an eighth aspect, a communication system is provided. The communication system includes a first node, a second node, and a third node. The first node is configured to perform the method according to any possible implementation of the first aspect, the second node is configured to perform the method according to any possible implementation of the second aspect, and the third node is configured to perform the method according to any possible implementation of the third aspect.

For example, the first node may be an MN, a chip or a circuit in the MN, or a functional module that can invoke and execute a program in the MN.

For example, the second node may be a candidate SN, a chip or a circuit in the candidate SN, or a functional module that can invoke and execute a program in the candidate SN.

For example, the third node may be a source SN, a chip or a circuit in the source SN, or a functional module that can invoke and execute a program in the source SN.

According to a ninth aspect, a computer-readable storage medium is provided. The computer-readable storage medium stores computer program code or instructions. When the computer program code or the instructions are run, the method according to any possible implementation of the first aspect to the third aspect is implemented.

According to a tenth aspect, a chip is provided. The chip includes at least one processor, the at least one processor is coupled to a memory, the memory is configured to store a computer program, and when the computer program is run, the method according to any possible implementation of the first aspect to the third aspect is implemented.

For example, the chip may include an input circuit or interface configured to send information or data and an output circuit or interface configured to receive information or data.

According to an eleventh aspect, a computer program product is provided. The computer program product includes computer program code or instructions. When the computer program code or the instructions are run, the method according to any possible implementation of the first aspect to the third aspect is implemented.

According to a twelfth aspect, a computer program is provided. When the computer program is run, the method according to any possible implementation of the first aspect to the third aspect is implemented.

### BRIEF DESCRIPTION OF DRAWINGS

FIG. 1 is a diagram of a system architecture to which an embodiment of this application is applicable;
FIG. 2 is a block diagram of a terminal that supports EN-DC;
FIG. 3 is a block diagram of a terminal that supports MR-DC;
FIG. 4 is a block diagram of an MN and an SN in an MR-DC scenario;
FIG. 5 is a schematic flowchart of LTM switching;
FIG. 6 is a schematic flowchart of a communication method according to an embodiment of this application;
FIG. 7a and FIG. 7b are a schematic flowchart of another communication method according to an embodiment of this application;
FIG. 8 is a block diagram of a communication apparatus according to an embodiment of this application; and
FIG. 9 is a diagram of another communication apparatus according to an embodiment of this application.

### DESCRIPTION OF EMBODIMENTS

The following describes technical solutions of this application with reference to accompanying drawings.

First, in this application, "indicate" may include directly indicating and indirectly indicating. When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent. In addition, a common part of all pieces of information may be identified and indicated in a unified manner, to reduce indication overheads caused by separately indicating same information.

Second, in this application, "at least one" indicates one or more, "a plurality of" indicates two or more. In addition, in embodiments of this application, "first", "second", and various numbers (for example, "#1" and "#2") are merely used for differentiation for ease of description, and are not intended to limit the scope of embodiments of this application.

Third, in embodiments of this application, the word like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a related concept in a specific manner. In addition, in various embodiments, "optionally, the method further includes...." may be understood as that all these steps may be performed, or none of these steps may be performed, or only some of these steps may be performed. This is not limited in this application.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

Fourth, "stored" in embodiments of this application may mean being stored in one or more memories. The one or more memories may be separately disposed, or may be integrated into an encoder, a decoder, a processor, or a communication apparatus. Alternatively, a part of the one or more memories may be separately disposed, and the other part may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a future communication system. This is not limited in this application.

Sixth, in embodiments of this application, "of (of)", "corresponding (corresponding, relevant)", "corresponding (corresponding)", and "associated (associate)" may sometimes be used interchangeably. It should be noted that expressed meanings are consistent when no difference between the terms is emphasized.

Seventh, in embodiments of this application, "in a case of", "when", and "if" may sometimes be used interchangeably. It should be noted that expressed meanings are consistent when no difference between the terms is emphasized. It should be further understood that, in this application, "when", "if", "in a case of", and "provided that" mean that a network element performs corresponding processing in an objective situation, but do not constitute a limitation on time, do not require that the device has a determining action during implementation, and do not mean another limitation either. In addition, in this application, descriptions of the foregoing conditions "when", "if", "in a case of", and "provided that" may be understood as necessary conditions, and whether the condition is a sufficient condition or whether the condition is a sufficient and necessary condition is not limited. For example, "performing B when A is met" may be understood as "performing B when at least A is met".

Eighth, in embodiments of this application, "B corresponding to A" or "A corresponds to B" indicates that B is associated with A, and B may be determined based on A. However, it should be further understood that determining B based on A does not mean that B is determined based only on A, and B may alternatively be determined based on A and/or other information.

Ninth, in this application, the term "and/or" describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

In addition, the terms "system", "network", and "apparatus" in embodiments of this application may be used interchangeably.

Ninth, in embodiments of this application, "performing B in response to A" may also be replaced with a description like "performing B according to A" or "performing B based on A", which is used to indicate that there is an association relationship between A and B. Similar parts are not described again below.

Tenth, "sending information" in this application may be understood as that a device sends the information to another device, or may be understood as that a logical module in a device sends the information to another logical module. For example, "a network device sends information" may be understood as that the network device sends the information to another device (for example, a terminal), or may be understood as that a logical module 1 in the network device sends the information to a logical module 2 in the network device.

In this application, "receiving information" may be understood as that a device receives the information from another device, or may be understood as that a logical module in the device receives the information from another logical module. For example, "a network device receives information" may be understood as that the network device receives the information from another device (for example, a terminal), or may be understood as that a logical module 1 in the network device receives the information from a logical module 2 in the network device.

In addition, in this application, "sending information to... (an access network device)" may be understood as that a destination end of the information is the access network device, and may include directly or indirectly sending the information to the access network device. "Receiving information from... (an access network device)" may be understood as that a source end of the information is the access network device, and may include directly or indirectly receiving the information from the access network device. Necessary processing, for example, a format change, may be performed on the information when the information is sent between the source end and the destination end, but the destination end can understand valid information from the source end. Similar descriptions in this application may be construed in a similar manner, and details are not described herein again.

It may be understood that, in the following method embodiments, methods and operations implemented by a device (for example, a network device or a terminal) may alternatively be implemented by a component (for example, a chip or a circuit) of the device.

It should be understood that, in various embodiments of this application, sequence numbers of the following processes do not mean execution sequences. The execution sequences of the processes should be determined based on functions and internal logic of the processes, and should not be construed as any limitation on implementation processes of embodiments of this application. It should be understood that objects described in such a manner are interchangeable in proper circumstances, so that solutions other than embodiments of this application can be described. In addition, in embodiments of this application, words such as "S610" are merely identifiers for ease of description, and do not limit a sequence of performing steps. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

For ease of description, the following describes in detail a system architecture in embodiments of this application.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, a future communication system, vehicle-to-everything (vehicle-to-everything, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine type communication (machine type communication, MTC), internet of things (internet of things, IoT), long term evolution-machine (long term evolution-machine, LTE-M), machine-to-machine (machine-to-machine, M2M), or the like. This application may be further applied to a future communication system, for example, a 6th generation (6th Generation, 6G) mobile communication system.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device in embodiments of this application includes various devices having a wireless communication function, and the terminal device may be configured to connect to a person, an object, a machine, and the like. The terminal device may be widely used in various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, remote medical, smart grid, smart home, smart office, smart wearable, smart transportation, smart city drone, robot, remote sensing, passive sensing, positioning, navigation and tracking, and autonomous delivery. The terminal device may be a terminal in any one of the foregoing scenarios, for example, an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-helicopter, a four-helicopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or UE is used below for description.

The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. The IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and power saving for terminals by using, for example, a narrowband (narrowband, NB) technology.

In embodiments of this application, the terminal device may alternatively be a vehicle or an entire vehicle, and may implement communication via the internet of vehicles, or may be a component located in a vehicle (for example, placed in the vehicle or installed in the vehicle), that is, a vehicle-mounted terminal device, a vehicle-mounted module, or an on-board unit (on-board unit, OBU).

In addition, the terminal device may further include a sensor like an intelligent printer, a train detector, or a gas station, and main functions include: collecting data (a part of terminal devices), receiving control information and downlink data from a network device, sending an electromagnetic wave, and transmitting uplink data to the network device.

In this application, an apparatus configured to implement a function of the terminal device may be a terminal device, or may be an apparatus that can support the terminal device in implementing the function, for example, a chip system, a hardware circuit, a software module, or a combination of the hardware circuit and the software module. The apparatus may be mounted in the terminal device or may be used together with the terminal device. In the technical solutions provided in this disclosure, an example in which the apparatus configured to implement the function of the terminal device is a terminal device and the terminal device is UE is used to describe the technical solutions provided in this disclosure.

The network device in embodiments of this application is an entity that is on a network side and that is configured to transmit or receive a signal, and may be configured to perform mutual conversion between a received over-the-air frame and an internet protocol (internet protocol, IP) packet, and serve as a router between the terminal device and a remaining part of an access network, where the remaining part of the access network may include an IP network or the like.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The RAN may be an open access network (open RAN, O-RAN or ORAN), a cloud radio access network (cloud radio access network, CRAN), or a wireless fidelity (wireless fidelity, Wi-Fi) system. Alternatively, the RAN may be a communication system that integrates two or more of the foregoing systems. The base station may cover various names in the following in a broad sense, or may alternatively be replaced with the following names, for example, a NodeB (NodeB), an evolved NodeB (evolved NodeB, eNB), a next generation NodeB (next generation NodeB, gNB), a relay station, an access point, a transmitting and receiving point point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a function of a base station in D2D, V2X, and M2M communication, a network side device in a 6G network, a device that bears a function of a base station in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device configured to communicate with another base station.

In some deployments, the gNB may include a CU and a DU. The CU and the DU may be connected through an interface, for example, an F1 interface. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally converted into information at the PHY layer, or is converted from information at the PHY layer. Therefore, in this architecture, higher layer signaling such as RRC layer signaling may also be considered as being sent by the DU or sent by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In different systems, the CU (or a central unit control plane (CU-control plane, CU-CP) and a distributed unit user plane (CU-user plane, CU-UP)), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells feature small coverage and low transmit power, and are applicable to providing a highspeed data transmission service.

In this application, an apparatus configured to implement a function of the access network device may be an access network device, or may be an apparatus that can support the access network device in implementing the function, for example, a chip system, a hardware circuit, a software module, or a combination of the hardware circuit and the software module. The apparatus may be mounted in the access network device or may be used together with the access network device. In the technical solutions provided in this application, an example in which the apparatus configured to implement the function of the access network device is an access network device and the access network device is a base station is used to describe the technical solutions provided in this application.

In embodiments of this application, one network device may include one or more cells, and each cell includes one or more transmission reception points (transmission reception points, TRPs) or transmission points (transmission points, TPs).

The network device and the terminal device may be deployed on land, including an indoor or outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualization functions instantiated on a platform (for example, a cloud platform); or may be entities including a dedicated or general-purpose hardware device and a software function. Specific forms of the terminal device and the network device are not limited in this application.

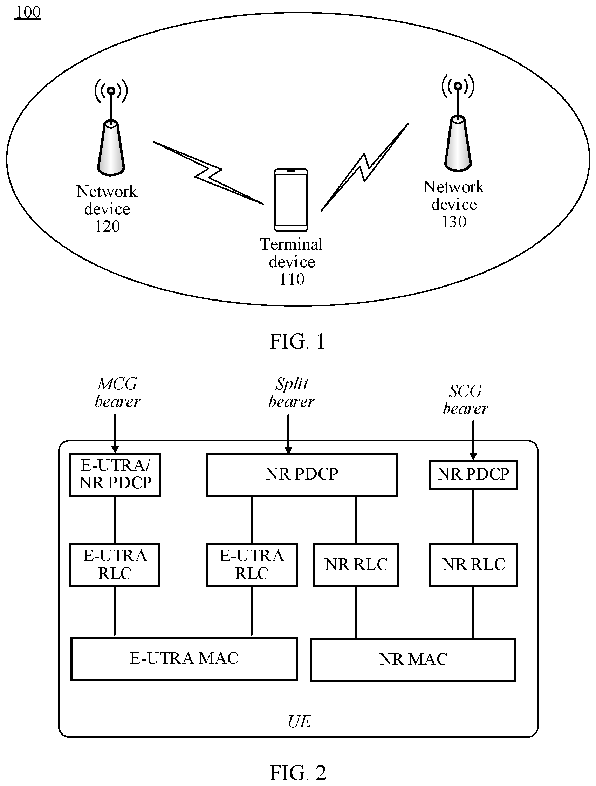

FIG. 1 is a diagram of a communication system 100 to which an embodiment of this application is applicable. As shown in FIG. 1, the communication system 100 may include at least one terminal device, for example, a terminal device 110 shown in FIG. 1. The communication system 100 may further include at least two network devices, for example, a network device 120 and a network device 130 shown in FIG. 1. The terminal device 110 may simultaneously communicate with the network device 120 and the network device 130. For example, the terminal device 110 may communicate with the network device 120 through a radio link, and the terminal device 110 may communicate with the network device 130 through a radio link. A plurality of antennas may be configured for each communication device, for example, the terminal device 110, the network device 120, or the network device 130. The plurality of antennas configured for each communication device in the communication system may include at least one sending antenna configured to send a signal and at least one receiving antenna configured to receive a signal. Therefore, communication between communication devices in the communication system, between the terminal device 110 and the network device 120, and between the terminal device 110 and the network device 130 may be performed by using a multi-antenna technology.

It should be understood that FIG. 1 is merely a simplified diagram used as an example for ease of understanding, and the communication system may further include another network device or another terminal device that is not shown in FIG. 1.

It should be further understood that communication between the terminal device 110 and both the network device 120 and the network device 130 may also be referred to as dual connectivity (dual connectivity, DC) of the terminal device. One network device that communicates with the terminal device 110 may be referred to as a master node (master node, MN), and the other network device that communicates with the terminal device 110 may be referred to as a secondary node (secondary node, SN). For example, it is assumed that the network device 120 is an MN, and the network device 130 is an SN.

As an example, based on different types of the MN and the SN, a DC scenario may be further classified into: EN-DC and MR-DC. The following separately describes EN-DC and MR-DC in detail.

### 1. EN-DC

EN-DC refers to LTE and 5G dual connectivity. The letter E represents evolved universal terrestrial radio access new radio (evolved universal terrestrial radio access new radio, E-UTRA), which is an air interface in an LTE cellular network. The letter N indicates new radio (new radio, NR), which is a global standard for a unified and more powerful 5G wireless air interface. That is, a terminal device that supports EN-DC may be connected to both an LTE master node eNB (MN-eNB) and a 5G-NR secondary node gNB (SN-gNB). EN-DC is a technology that can introduce 5G services and data rates to 4G-dominant networks.

FIG. 2 is a block diagram of a terminal device (for example, UE) that supports EN-DC. As shown in FIG. 2, bearers in a network may be classified into three types: a master cell group (master cell group, MCG) bearer, a secondary cell group (secondary cell group, SCG) bearer, and a split (split) bearer. In EN-DC, PDCP, RLC, and MAC corresponding to a master node are used for the MCG bearer. For EN-DC, 4G (E-UTRA) is a master node. Therefore, E-UTRA PDCP, E-UTRA RLC, and E-UTRA MAC are used for the MCG bearer. PDCP, RLC, and MAC corresponding to a secondary node are used for the SCG bearer. For EN-DC, 5G-NR (gNB) is a secondary node. Therefore, NR PDCP, NR RLC, and NR MAC are used for the SCG bearer. The split bearer splits air interface data into two paths of data for carrying. NR PDCP is used at PDCP; at RLC, E-UTRA RLC is used to carry air interface data of the MN, and NR RLC is used to carry air interface data of the SN; and at MAC, E-UTRA MAC is used to carry the air interface data of the MN, and NR MAC is used to carry the air interface data of the SN.

It should be understood that, the LTE master node eNB (MN-eNB) uses a plurality of different frequencies to form a network including a plurality of layers of cells. All these cells can be used as control plane anchors. Therefore, these 4G cells are collectively referred to as an MCG, and a data radio bearer established on the MCG is referred to as an MCG bearer. Correspondingly, a plurality of 5G cells form an SCG, and a data radio bearer established on the SCG is referred to as an SCG bearer. In contrast, the split bearer involves splitting air interface data into two paths of data for carrying.

### 2. MR-DC

MR-DC refers to 5G and 5G dual connectivity. A terminal device that supports MR-DC may be connected to both a 5G-NR master node gNB (MN-gNB) and a 5G-NR secondary node gNB (SN-gNB).

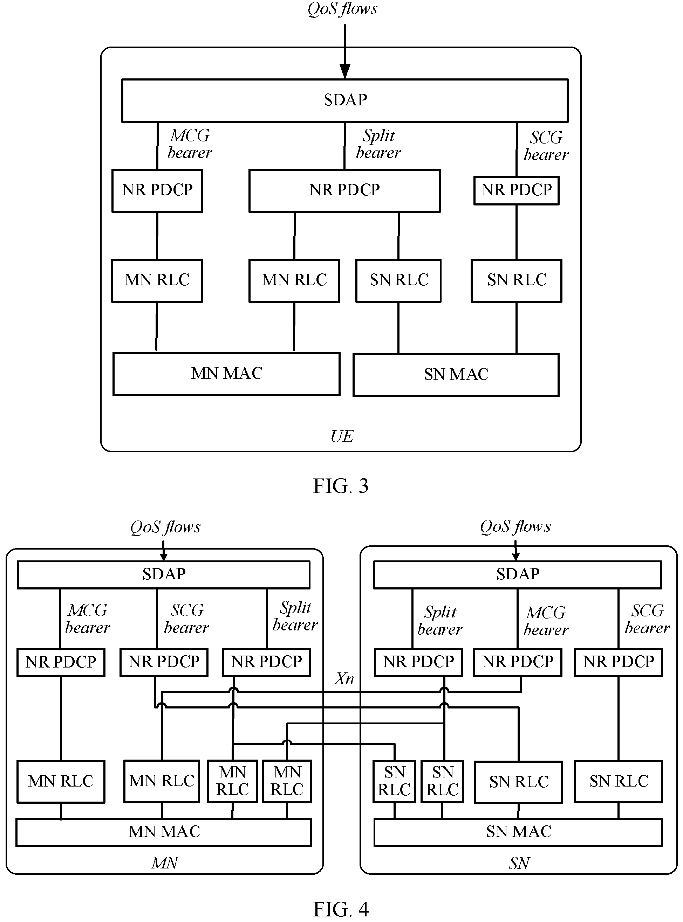

FIG. 3 is a block diagram of a terminal device (for example, UE) that supports MR-DC. As shown in FIG. 3, bearers in a network may be classified into three types: a master cell group (master cell group, MCG) bearer, a secondary cell group (secondary cell group, SCG) bearer, and a split (split) bearer. In MR-DC, PDCP, RLC, and MAC corresponding to a master node are used for the MCG bearer. For MR-DC, 5G-NR (gNB) is a master node. Therefore, NR PDCP, MN RLC, and MN MAC are used for the MCG bearer. PDCP, RLC, and MAC corresponding to a secondary node are used for the SCG bearer. For MR-DC, 5G-NR (gNB) is a secondary node. Therefore, NR PDCP, SN RLC, and SN MAC are used for the SCG bearer. The split bearer splits air interface data into two paths of data for carrying. NR PDCP is used at PDCP; at RLC, MN RLC is used to carry air interface data of the MN, and SN RLC is used to carry air interface data of the SN; and at MAC, MN MAC is used to carry the air interface data of the MN, and SN MAC is used to carry the air interface data of the SN.

FIG. 4 is a block diagram of an MN and an SN in an MR-DC scenario. As shown in FIG. 4, downlink data is used as an example. It is assumed that an MN serves as an anchor, and after the MN receives data from a core network, for a split bearer, the downlink data is split at a PDCP layer, and is separately sent to respective RLC/MAC of the MN and the SN for processing. For example, the MN may send the downlink data to a terminal device by using an MN RLC layer and an MN MAC layer in the MN; or the MN may send the downlink data to an SN RLC layer in the SN, and the SN RLC layer and an MN MAC layer in the SN send the downlink data to a terminal device.

To facilitate understanding of embodiments of this application, terms used in this application are first briefly described.

### 1. Timing advance (timing advance, TA)

TA is generally used for uplink transmission of a terminal, and means that the terminal sends uplink data in advance of TA time based on a corresponding instruction. Specifically, to enable the uplink data of the terminal to arrive at a network device at an expected time, and estimate transmission latency caused by a distance, the network device may calculate a TA value of the terminal based on a random access preamble sent by the terminal, and notify the terminal of the obtained TA value by using a timing advance command (timing advance command, TAC).

### 2. Random access

Random access (random access) is a mandatory process of establishing a radio link between a terminal and a network side. Data exchange between the network side and the terminal can be normally performed only after the random access is completed.

Random access can implement the following three basic functions.
(1) The terminal achieves uplink synchronization with the network side, that is, the terminal obtains the TA value. Once uplink out-of-synchronization occurs, the terminal can transmit data only on a physical random access channel (physical random access channel, PRACH).
(2) The terminal requests uplink grant (uplink grant, UL grant) resources to send a message 3 (message 3, Msg3).
(3) A unique cell radio network temporary identity (cell radio network temporary identity, C-RNTI) is allocated to the terminal.

According to different service triggering manners, random access may be classified into contention-based random access (contention-based random access, CBRA) and contention-free random access (contention-free random access, CFRA). The term "contention" means that a conflict may occur between different terminals.

In a first implementation, the contention-based random access includes the following steps:
Step 0. Each terminal listens to system information. For example, the terminal obtains configuration information of a cell PRACH by listening to a system information block 1 (system information block 1, SIB1) or a system information block 2 (system information block 2, SIB2).

Step 1. A plurality of terminals send a same preamble sequence to a network device in a same subframe by using a same PRACH resource, to request a resource grant of the network device. In this case, the network device cannot know a terminal that sends a request, and a conflict may occur.

Step 2. The network device delivers a random access response (random access response, RAR) message. The RAR includes a TA value and a UL grant used to transmit a message 3. Each terminal may receive the RAR delivered by the network device.

Step 3. The plurality of terminals that have received the RAR send unique messages related only to the plurality of terminals, that is, the messages 3, to the network device at an occasion indicated by the UL grant.

Step 4. After receiving the messages 3 sent by the plurality of terminals, the network device determines a terminal that succeeds in contention, and sends a message 4 (message 4, Msg4) to the terminal, to determine a terminal that currently successfully accesses the network device. This mechanism is a contention resolution mechanism.

In a second implementation, the contention-free random access includes the following steps:
Step 0. A network device sends random access preamble assignment (random access preamble assignment) information to a terminal through dedicated signaling. For example, the network device sends, to the terminal, a preamble (referred to as a contention-free preamble for short below) and a PRACH resource that are required for contention-free random access. If a preamble resource is insufficient in this case, the network device notifies the terminal to initiate contention-based random access. In a manner, a preamble index (preamble index) in a PDCCH format 1a is set to all 0s. In this way, when the preamble index obtained through decoding by the terminal is all 0s, the terminal performs contention-based random access.

In a switching scenario, the contention-free preamble is sent to the terminal through a switch command.

Step 1. The terminal sends the contention-free preamble to the network device.

Step 2. The network device feeds back a RAR to the terminal. The RAR includes a TA value.

It should be understood that, after receiving the RAR, the terminal determines that random access succeeds.

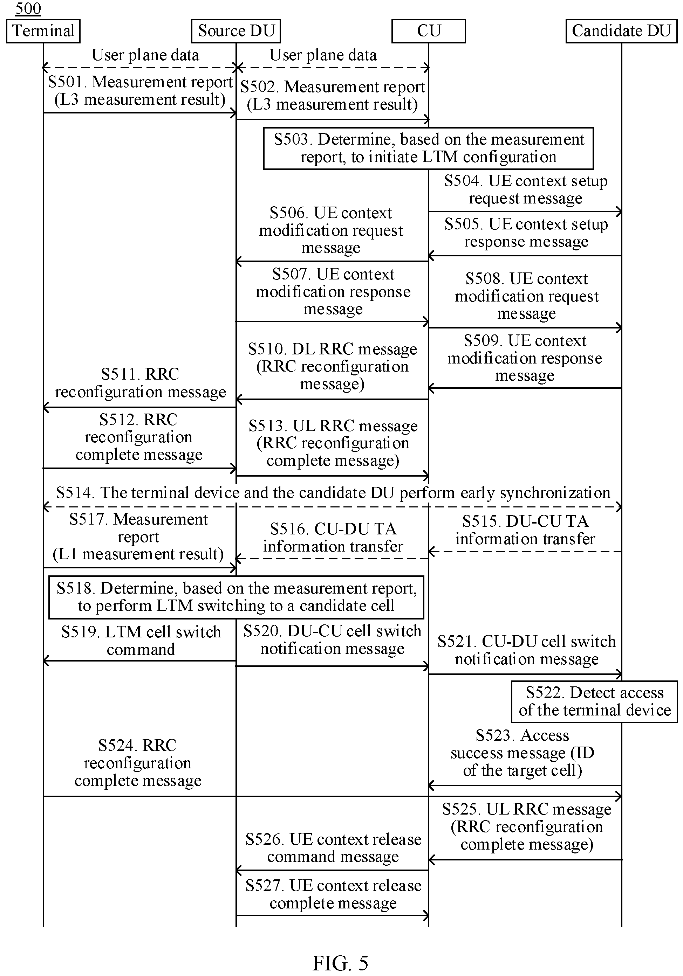

The following describes an example of an inter-base station cell switching solution in an LTM scenario with reference to FIG. 5.

FIG. 5 is a schematic flowchart of LTM switching. As shown in FIG. 5, the LTM switching includes the following steps.

In this implementation, one CU of a base station may be connected to a plurality of DUs (for example, a source DU and a candidate DU). Before the LTM switching is performed, user plane data may be transmitted between a terminal and the source DU, and user plane data may be transmitted between the source DU and the CU. It should be noted that the LTM switching means that a switching decision is delivered from the CU to the DU, to reduce F1 interaction between the CU and the DU. That is, the DU may determine, based on a measurement report reported by the terminal, whether to initiate switching, and send a switch command to the terminal.

S501. The terminal sends the measurement report to the source DU.

Correspondingly, the source DU receives the measurement report from the terminal.

The measurement report includes a layer 3 (layer 3, L3) measurement result, for example, includes a measurement result of a neighboring cell. The measurement result may indicate signal quality of the neighboring cell. The neighboring cell is a cell to which the terminal may switch after the terminal moves.

S502. The source DU sends the measurement report to the CU.

Correspondingly, the CU receives the measurement report from the source DU.

For example, the source DU may send an uplink (uplink, UL) RRC message to the CU, where the UL RRC message includes the measurement report, and the measurement report includes the L3 measurement result reported by the terminal.

S503. The CU determines, based on the measurement report, to initiate LTM configuration.

For example, the CU determines, based on the measurement result of the neighboring cell carried in the measurement report (for example, the measurement result of the neighboring cell indicates that the signal quality of the neighboring cell is high), to initiate the LTM configuration.

S504. The CU sends a UE context setup request (UE context modification request) message to the candidate DU.

Correspondingly, the candidate DU receives the UE context setup request message from the CU.

The UE context setup request message includes at least one of an identity (identity, ID) of a first candidate cell, an LTM configuration ID of the first candidate cell, an LTM configuration ID mapping list (a configuration identity of a first cell), or a channel state information (channel state information, CSI) resource configuration.

It should be noted that the candidate cell includes a source cell, and the source cell belongs to the source DU. A quantity of candidate DUs is not limited herein, that is, the CU of the base station corresponds to a plurality of DUs, and therefore, a quantity of candidate cells is also not limited.

It may be understood that the CU may further indicate an ID of the source DU, to request the candidate DU to provide a physical random access channel (physical random access channel, PRACH) resource, namely, a configuration used for early synchronization in subsequent step S514.

Optionally, the CU may further request the candidate DU to provide a lower-layer configuration used to generate a reference configuration, namely, a lower-layer RRC configuration corresponding to the first candidate cell.

S505. The candidate DU sends a UE context setup response (UE context modification response) message to the CU.

Correspondingly, the CU receives the UE context setup response message from the candidate DU.

For example, if the candidate DU accepts the LTM configuration request, the candidate DU sends the UE context setup response message to the CU. The UE context setup response message includes the lower-layer RRC configuration corresponding to the first candidate cell (for example, including at least one of the following: a transmission configuration indicator (transmission configuration indicator, TCI) state configuration, a random access channel (random access channel, RACH) configuration, and a CSI report configuration). The RACH configuration is an early uplink synchronization configuration, and there is a correspondence between the CSI report configuration and the CSI resource configuration.

S506. The CU sends a UE context modification request message to the source DU.

Correspondingly, the source DU receives the UE context modification request message from the CU.

The UE context modification request message includes one or more of the CSI report configuration, the RACH resource configuration, or the TCI state configuration of the first candidate cell.

S507. The source DU sends a UE context modification response message to the CU.

Correspondingly, the CU receives the UE context modification response message from the source DU.

The UE context modification response message includes an updated lower-layer configuration, for example, an updated CSI report configuration, and a CSI resource configuration corresponding to the CSI report configuration is used to send a lower-layer measurement result of the first candidate cell in the source cell.

S508. The CU sends a UE context modification request message to the candidate DU.

Correspondingly, the candidate DU receives the UE context modification request message from the CU.

The UE context modification request message may include the CSI report configuration, the TCI state information, the RACH configuration, and the LTM configuration ID of the first candidate cell.

Optionally, the CU may further indicate an updated CSI resource configuration or a lower-layer part of the reference configuration to the candidate DU.

S509. The candidate DU sends a UE context modification response message to the CU.

Correspondingly, the CU receives the UE context modification response message from the candidate DU.

The UE context modification response message may include an updated lower-layer configuration, for example, a generated CSI resource configuration. The CSI resource configuration is used to send CSI of a candidate cell in the first candidate cell.

Optionally, the candidate DU may indicate the updated CSI report configuration to the CU.

S510. The CU sends a downlink (downlink, DL) RRC message to the source DU.

Correspondingly, the source DU receives the DL RRC message from the CU.

The DL RRC message includes an RRC reconfiguration message, and the RRC reconfiguration message includes an LTM configuration (for example, includes at least one of the following: the CSI report configuration, the TCI state configuration, the RACH configuration, or the LTM configuration ID of the first candidate cell).

S511. The source DU sends the RRC reconfiguration message to the terminal.

Correspondingly, the terminal receives the RRC reconfiguration message from the source DU.

S512. The terminal sends an RRC reconfiguration complete message to the source DU.

Correspondingly, the source DU receives the RRC reconfiguration complete message from the terminal.

S513. The source DU sends a UL RRC message to the CU.

Correspondingly, the CU receives the UL RRC message from the source DU.

The UL RRC message includes the RRC reconfiguration complete message.

S514. The terminal and the candidate DU perform early synchronization.

For example, the terminal and the candidate DU perform early synchronization for the first candidate cell based on the random access resource configuration of the first candidate cell, where the early synchronization includes early uplink synchronization or early downlink synchronization. The early uplink synchronization may be implemented by obtaining a timing advance TA through random access.

S515. The candidate DU sends a DU-CU information transfer message to the CU.

Correspondingly, the CU receives the DU-CU information transfer message from the candidate DU.

The DU-CU information transfer message includes one or more of the following: a TA value of the first candidate cell, associated contention-free random access (contention-free random access, CFRA) resource information, the identity ID of the first candidate cell, or the identifier ID of the source DU.

S516. The CU sends a CU-DU information transfer message to the source DU.

Correspondingly, the source DU receives the CU-DU information transfer message from the CU.

The CU-DU information transfer message includes the TA of the first candidate cell, the associated CFRA resource information, or the identity ID of the first candidate cell.

It should be noted that the foregoing steps S514, S515, and S516 are optional steps, and may not be performed. That is, the terminal and the candidate DU may not perform early synchronization for the first candidate cell, and may perform uplink synchronization and downlink synchronization when the terminal communicates with the candidate DU.

S517. The terminal sends a measurement report to the source DU.

Correspondingly, the source DU receives the measurement report from the terminal.

The measurement report includes a lower-layer measurement result of the terminal, for example, a layer 1 (layer 1, L1) measurement result. For example, the terminal measures an RS based on the RS configuration, and then sends a measurement result to the source DU based on the CSI resource configuration.

S518. The source DU determines, based on the measurement report, to perform LTM switching to the candidate cell.

S519. The source DU sends an LTM cell switch command to the terminal.

Correspondingly, the terminal receives the LTM switch command from the source DU.

The LTM cell switch command includes an identity of a target cell (namely, the identity of the first candidate cell), and the LTM cell switch command indicates that the first candidate cell is used as the target cell to which the terminal switches from the source cell.

Optionally, the LTM cell switch command may further include beam information (for example, a TCI state identity) of the target cell and/or timing advance information of the target cell. The beam information is used by the terminal to receive downlink control information in a random access-less manner.

S520. The source DU sends a DU-CU cell switch notification message to the CU.

Correspondingly, the CU receives the DU-CU cell switch notification message from the source DU.

The DU-CU cell switch notification message indicates that the LTM cell switch command has been initiated to the terminal. The DU-CU cell switch notification message includes the identity of the target cell and the beam information of the target cell. It may be understood that the target cell is a candidate cell in the foregoing steps, for example, the first candidate cell. In the following, the candidate DU is replaced with a target DU for description.

S521. The CU sends a CU-DU cell switch notification message to the target DU.

Correspondingly, the target DU receives the CU-DU cell switch notification message from the CU.

The CU-DU cell switch notification message includes the identity of the target cell and the beam information of the target cell. It may be understood that the target DU is a candidate DU in the foregoing steps, namely, a DU corresponding to the target cell.

S522. The target DU detects access of the terminal.

For example, the terminal may access the target cell in a random access manner or a random access-less manner. If the random access-less manner is used, the target DU may send downlink control information to the terminal based on the beam information. In the random access-less manner, the terminal may access the target cell via a PUSCH based on the timing advance information in the LTM cell switch command in step S519, instead of accessing the target cell via a PRACH.

S523. The target DU sends an access success message to the CU.

Correspondingly, the CU receives the access success message from the target DU.

The access success message may carry the identity of the target cell. For example, after detecting access of the terminal, the target DU sends the access success message to the CU.

S524. The terminal sends an RRC reconfiguration complete message to the target DU.

Correspondingly, the target DU receives the RRC reconfiguration complete message from the terminal.

S525. The target DU sends a UL RRC message to the CU.

Correspondingly, the CU receives the UL RRC message from the target DU.

The UL RRC message includes the RRC reconfiguration complete message.

S526. The CU sends a UE context release command message to the source DU.

Correspondingly, the source DU receives the UE context release command message from the CU.

The UE context release command message indicates to release a resource of the candidate cell of the source DU.

S527. The source DU sends a UE context release complete message to the CU.

Correspondingly, the CU receives the UE context release complete message from the source DU.

Based on the foregoing solution, the terminal may switch from the source DU managed by the CU of the base station to the candidate DU managed by the CU, to complete LTM switching, thereby avoiding interruption of a communication service caused by deterioration of signal quality of a serving cell of the terminal, and ensuring service experience of users.

In a 5G system, movement of a terminal in an RRC connected state triggers switching. For example, before signal quality of a serving cell of the terminal deteriorates to be unable to support normal communication, the terminal may switch to a neighboring cell with good signal quality, so that continuous and uninterrupted communication services are provided to the terminal. However, it is found through research that in an LTM switching scenario, there is no solution of cell switching of a terminal between base stations, to be specific, switching of the terminal from a cell of one base station to a cell of another base station.

In view of this, embodiments of this application provide a communication method and a communication apparatus, so that the terminal can implement cell switching between base stations in the LTM switching scenario, and cell switching latency can be reduced based on early synchronization.

The communication method and apparatus provided in this application are further described with reference to the accompanying drawings. It may be understood that, in this application, an example in which a first node (for example, an MN), a second node (for example, a candidate SN), and a third node (for example, a source SN) are execution entities of the interaction example is used for description. However, execution entities of the interaction example are not limited in this application. For example, in this application, a method performed by any node may alternatively be implemented by a module (for example, a circuit, a chip, or a chip system) in the node, or a logical node, a logical module, or software that can implement all or some network functions.

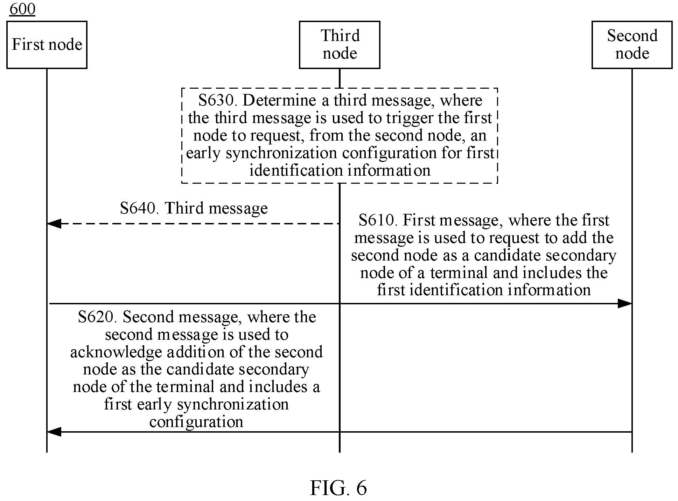

FIG. 6 is a schematic flowchart of a communication method according to an embodiment of this application. As shown in FIG. 6, the method includes the following steps.

S610. The first node sends a first message to the second node, and correspondingly, the second node receives the first message from the first node.

For example, the first message is used to request to add the second node as a candidate secondary node of a terminal, and the first message may be an SN ADDTION REQUEST message.

The first message includes first identification information. In this application, the first identification information is used to request an early synchronization configuration for the first identification information. For example, the first identification information may be a random access channel identifier RACH ID 1 or a DU identifier 1 of the third node.

It should be understood that the early synchronization configuration is used for early synchronization of the terminal. The early synchronization means that the terminal performs a synchronization procedure before receiving a switch command. The synchronization procedure may be a random access procedure. Switching latency of a primary secondary cell of the terminal can be reduced through the early synchronization.

Optionally, the first message further includes one or more of the following: first indication information, identification information of K cells, an identifier of the first node, an identifier of the third node, or second identification information, where the K cells include a first cell, the first cell belongs to the second node, and K is an integer greater than 1. Specific explanations are as follows:

### (1) First indication information

For example, the first indication information may be LTM indication information, and the first indication information is used to request, for LTM, to add the second node as the candidate secondary node of the terminal.

Optionally, the first indication information may alternatively be initiated by LTM to indicate, to the second node, that LTM configuration for the second node has been initiated. Optionally, the first indication information may be determined based on second indication information carried in a third message.

### (2) Identification information of K cells

The identification information of the K cells is used to recommend (or suggest) the second node to use the K cells as cells (primary secondary cells, PSCells) of the terminal.

For example, the identification information of the cell includes at least one of the following: a cell global identifier (cell global identifier, CGI) or a physical cell identifier (physical cell identifier, PCI).

It should be understood that the K cells belong to the second node.

### (3) Identifier of the first node

For example, the identifier of the first node may identify the first node, namely, a transmitting end of the first message. The identifier of the first node may be an ID of the first node (for example, MN Global NG-RAN Node ID), address information of the first node, or another representation form used to identify the first node.

### (4) Second identification information

In this application, the second identification information is used to request, from the second node, an early synchronization configuration for the second identification information, and the second identification information is different from the first identification information. For example, the second identification information may be a random access channel identifier RACH ID 2, the DU identifier of the third node, or another identifier.

That is, the first message may include one or more pieces of identification information, and the plurality of pieces of identification information are used to request early synchronization configurations for the plurality of pieces of identification information.

### (5) Identifier of the third node

For example, the identifier of the third node may identify the third node, and the identifier of the third node may be an ID of the third node (for example, Global NG-RAN Node ID and/or S-NG-RAN Node UE XnAP ID), address information of the third node, or another representation form used to identify the third node.

In an implementation, the second node may determine, based on the identifier of the third node carried in the first message, that a first early synchronization configuration corresponding to the first identification information is allocated to the third node. In other words, the second node allocates the first early synchronization configuration corresponding to the first identification information to the third node.

Optionally, before step S610 is performed, the first node obtains (or determines) the first message, that is, the method further includes the following step S601.

S601. The first node obtains (or determines) the first message.

In a first example, the first node receives the third message from the third node, and in response to the third message, the first node obtains (or determines) the first message.

It should be understood that the third message in this implementation may be determined by the third node, and a specific implementation may include the following steps S630 and S640.

S630. The third node determines the third message.

S640. The third node sends the third message to the first node.

Correspondingly, the first node receives the third message from the third node.

In an implementation, the third node may determine, based on a measurement report from the terminal device, to initiate LTM configuration for the second node, that is, determine the third message. The measurement report includes a measurement result of a neighboring cell (for example, a cell of the second node, including the first cell), and the measurement result may indicate signal quality of the neighboring cell. For example, the signal quality is greater than or equal to a preset threshold.

The third message is used to trigger the first node to request the second node to be added as the candidate secondary node of the terminal. For example, the third message may be an SN CHANGE REQUIRED message.

It should be understood that, "used to trigger" may be understood as: In response to the third message, the first node performs step S610. For example, the third message is used as a trigger condition, so that after receiving the third message, the first node sends the first message to the second node, that is, requests the second node to be added as the candidate secondary node of the terminal.

Optionally, after receiving the third message, the first node may further determine, with reference to a local policy (for example, inter-base station reachability), that the second node can be used as the candidate secondary node of the terminal, and/or the first node further sends the first message to the second node based on that the second node can perform multi-connectivity with the first node.

For example, the third message may include an identifier of the second node and the first identification information. Specific explanations are as follows:

### (1) Identification information of the second node

The identification information of the second node may identify the second node, and may be an ID of the second node (for example, SN Global NG-RAN Node ID), address information of the second node, or another representation form used to identify the second node.

Optionally, when the third node determines the third message, the third message may include identifiers of a plurality of nodes. The identifiers of the plurality of nodes are used to trigger the first node to request the plurality of nodes to add the plurality of nodes as candidate secondary nodes of the terminal. The plurality of nodes include the second node.

In an implementation, the first node may determine, based on the identification information of the second node carried in the third message, that the second node can be used as the candidate secondary node of the terminal, and send the first message to the second node in step S610.

### (2) First identification information

In this application, the first identification information is used to request the early synchronization configuration for the first identification information, and the first identification information is different from the identification information of the second node.

For example, the first identification information may be the random access channel identifier RACH ID 1, the DU ID of the third node, or another ID. For details, refer to related descriptions in S610.

In an implementation, the first node may send, in step S610, the first identification information to the second node based on the first identification information carried in the third message, to request the second node to provide the early synchronization configuration for the first identification information.

Optionally, the third message further includes one or more of the following: the second identification information, the identifier of the third node, the second indication information, or the identification information of the K cells. The K cells include the first cell, the first cell belongs to the second node, and K is a positive integer. Specific explanations are as follows:

### (1) Second identification information

For example, the second identification information is used to request, from the second node, the early synchronization configuration for the second identification information, and the second identification information is different from the first identification information. For example, the second identification information may be the random access channel identifier RACH ID 2 or another ID. For details, refer to the explanations in S610.

It should be noted that the first identification information and the second identification information may be determined based on a topology structure of a DU of the third node, and different pieces of identification information are correspondingly allocated to different DUs of the third nodes, that is, the second identification information is different from the first identification information.

That is, when the third node determines the third message, the third message may include one or a plurality of pieces of identification information, where the plurality of pieces of identification information are used to request early synchronization configurations for the plurality of pieces of identification information, and the plurality of pieces of identification information include the first identification information.

In an implementation, the first node may determine, based on the second identification information carried in the third message, to request, from the second node, the corresponding early synchronization configuration for the second identification information. Therefore, the second identification information may be further carried in step S610.

### (2) Identifier of the third node

For example, the identifier of the third node may identify the third node, namely, a transmitting end of the third message, and the identifier of the third node may be the ID of the third node (for example, Global NG-RAN Node ID and/or S-NG-RAN Node UE XnAP ID), the address information of the third node, or another representation form used to identify the third node.

In an implementation, after receiving, from the second node, the first early synchronization configuration corresponding to the first identifier and/or a third early synchronization configuration corresponding to the second identification information, the first node may send the first early synchronization configuration and/or the third early synchronization configuration to the third node based on the identifier of the third node.

### (3) Second indication information

For example, the second indication information may be LTM indication information, and the second indication information indicates to trigger, for LTM, the first node to request the second node to be added as the candidate secondary node of the terminal.

Optionally, the second indication information may alternatively be initiated by LTM to indicate, to the first node, that the LTM configuration for the second node has been initiated (initiated).

In an implementation, the first node may determine, for LTM based on the first indication information carried in the third message, to request to add the second node as the candidate secondary node of the terminal, and send the first indication information to the second node in step S610. The first indication information may be determined based on the second indication information.

### (4) Identification information of the K cells

The identification information of the K cells is used to recommend (or suggest) the first node to use the K cells as cells PSCells of the terminal. For details, refer to related descriptions in S610.

For example, the identification information of the cell includes at least one of the following: a cell global identifier CGI or a physical cell identifier PCI.

In an implementation, the third node may determine, based on signal quality of the K cells, for example, the signal quality of the K cells being greater than or equal to a preset threshold, that the K cells can be used as recommended cells, and include the identification information of the K cells in the third message. Further, the first node sends the identification information of the K cells to the second node in step S610, so that the second node selects a cell of the terminal from the K cells.

In a second example, the first node may determine the first message by itself.

In an implementation, the first node determines the first message when determining to initiate the LTM configuration for the second node.

Optionally, the first node may determine the first message based on a measurement report from the terminal, to request the second node to serve as the candidate secondary node of the terminal.

For parameters included in the first message and specific explanations of the parameters, refer to related descriptions in step S610. Details are not described herein again.

S620. The second node sends a second message to the first node in response to the first message. Correspondingly, the first node receives the second message from the second node.

For example, the second message is used to acknowledge addition of the second node as the candidate secondary node of the terminal, and the second message may be an SN ADDTION REQUEST ACKNOWLEDGE message.

In an implementation, after receiving the second message, the second node determines whether to accept serving as the candidate secondary node of the terminal. For example, the second node may determine, based on factors such as good communication quality of a current link and/or a sufficient battery capacity of the current second node, to accept serving as the candidate secondary node of the terminal.

For example, the second message includes the first early synchronization configuration corresponding to the first identification information.

In an implementation, in response to the first identification information in the first message, the second node sends, to the first node, the early synchronization configuration corresponding to the first identification information, for example, the first early synchronization configuration. That is, the first early synchronization configuration corresponds to the first identification information.

It should be noted that the first early synchronization configuration is allocated by the second node to the third node, and may be used for early synchronization of the terminal. For example, the second node determines, based on the first identification information and the identifier of the third node that are carried in the first message, to allocate, to the third node, the first early synchronization configuration corresponding to the first identification information.

It should be understood that the first early synchronization configuration may be a random access configuration #1 (for example, a random access channel configuration RACH config 1, where the RACH config 1 corresponds to the RACH ID 1). The random access configuration #1 indicates a random access resource #1, and the random access resource #1 is used to perform an early synchronization procedure.

Optionally, the second message further includes one or more of the following: identification information of an accepted candidate primary secondary cell, the identifier of the third node, a second early synchronization configuration, a lower-layer RRC configuration corresponding to the accepted candidate primary secondary cell, or the third early synchronization configuration. Specific explanations are as follows:

### (1) Identification information of the accepted candidate primary secondary cell

The identification information of the accepted candidate primary secondary cell identifies a cell of the second node, for example, the first cell. That is, the primary secondary cell of the terminal may be switched to the first cell. The first cell belongs to the second node.

In an implementation, in response to the identification information of the K cells carried in the first message, the second node determines whether to accept one or more cells among the K cells recommended by the first node as a candidate secondary node of the terminal. For example, the second node may select the first cell from the K cells as a candidate primary secondary cell of the terminal. Optionally, the first cell has relatively sufficient communication resources among the K cells.

Further, the second node may send identification information of the first cell, for example, Cell A ID, to the first node based on the identifier of the first node carried in the first message.

It should be noted that the first early synchronization configuration carried in the second message may be considered as a configuration of the first cell, and in this case, the first early synchronization configuration is used for early synchronization for the first cell.

### (2) Identifier of the third node

For example, the identifier of the third node may identify the third node, and may be the ID of the third node (for example, Global NG-RAN Node ID and/or S-NG-RAN Node UE XnAP ID), the address information of the third node, or another representation form used to identify the third node.

### (3) Second early synchronization configuration

The second early synchronization configuration indicates a random access resource #2 (for example, a random access root sequence Root Sequence), and the random access resource #2 is used to perform an early synchronization procedure.

It should be understood that the second early synchronization configuration is allocated by the second node to the terminal, that is, the terminal #1 may perform random access to the first cell based on the random access resource #2. The second early synchronization configuration may be the same as or different from the first early synchronization configuration. This is not limited in this application.

For example, when the second early synchronization configuration is the same as the first early synchronization configuration, the first early synchronization configuration or the second early synchronization configuration includes one or more of the following: a random access resource, a random access preamble index (preamble index), or a random access root sequence Root Sequence. That is, the second node may allocate a same random access configuration to the third node and the terminal.

For example, when the second early synchronization configuration is different from the first early synchronization configuration, the first early synchronization configuration may include one or both of the following: a first random access resource and/or a random access preamble index, and the second early synchronization configuration includes one or both of the following: a second random access time-frequency resource and/or a random access root sequence Root Sequence, where the first random access resource is different from the second random access resource.

In an implementation, the third node sends a physical downlink control channel (physical downlink control channel, PDCCH) command to the terminal by using a random access resource indicated by the first early synchronization configuration. In response to the PDCCH command, the terminal sends a first random access preamble to the second node based on the obtained random access resource and the second early synchronization configuration, to complete early synchronization.

### (4) Third early synchronization configuration

For example, assuming that the first message carries the second identification information, the second node may further allocate the third early synchronization configuration to the terminal for the second identification information. That is, the third early synchronization configuration corresponds to the second identification information. It should be noted that the third early synchronization configuration is allocated by the second node to the third node, and may be used for early synchronization of the terminal.

That is, the first message sent by the first node to the second node may carry a plurality of pieces of identification information. In this case, in response to the first message, the second node may send, to the first node, a plurality of early synchronization configurations corresponding to the plurality of pieces of identification information.

Optionally, different early synchronization configurations corresponding to different identification information indicate different random access resources.

### (5) Lower-layer RRC configuration corresponding to the accepted candidate primary secondary cell

For example, the configuration includes but is not limited to a TCI state configuration, a random access channel RACH configuration, or a CSI report configuration.

Optionally, based on the foregoing step S620, the method further includes the following steps S602 and S603.

S602. The first node sends a fourth message to the third node.

Correspondingly, the third node receives the fourth message from the first node.

For example, the fourth message may be an SN MODIFICATION REQUEST message.

The fourth message includes the first early synchronization configuration and the first identification information corresponding to the first early synchronization configuration, and the first early synchronization configuration indicates the random access resource #1.

S603. The third node triggers, based on the first early synchronization configuration and via a second cell, early synchronization of the terminal for the first cell.

It should be understood that the second cell belongs to the third node, and the second cell is a current serving cell of the terminal.

In an implementation, the third node determines that the first early synchronization configuration is associated with the second cell, and further, the third node may initiate, based on the first early synchronization configuration and via the second cell, the early synchronization for the first cell to the terminal. That the third node determines that the first early synchronization configuration is associated with the second cell includes: The third node receives early synchronization configurations (for example, the first early synchronization configuration and the third early synchronization configuration) corresponding to the plurality of pieces of identification information from the first node, and determines cells of the third node that are associated with the early synchronization configurations corresponding to the plurality of pieces of identification information (for example, the first early synchronization configuration is associated with the second cell). It is determined based on identification information of the terminal in the fourth message that the first early synchronization configuration is associated with the terminal, and it can be learned based on the foregoing step S620 that the first early synchronization configuration is the configuration of the first cell and is used by the terminal to perform the early synchronization for the first cell. In addition, the second cell is a current serving primary secondary cell of the terminal. In this case, the third node may initiate, via the second cell, the early synchronization for the first cell to the terminal.

Optionally, the fourth message may further include the second early synchronization configuration indicating the random access resource #2. It should be noted that the second early synchronization configuration is allocated by the second node to the terminal, and may be used for early synchronization of the terminal.

In an implementation, if the fourth message includes the second early synchronization configuration, the method 600 further includes the following steps S604 to S606.

S604. The third node encapsulates the second early synchronization configuration.

A specific encapsulation implementation includes: performing encapsulation based on an SN format, for example, encapsulating the second early synchronization configuration into an SN RRC Reconfiguration message.

S605. The third node sends a ninth message to the first node.

Correspondingly, the first node receives the ninth message from the third node.

The ninth message includes the encapsulated second early synchronization configuration, and the encapsulated second early synchronization configuration is used for the early synchronization of the terminal for the first cell.

For example, the ninth message may be an SN MODIFICATION REQUEST ACKNOWLEDGE message.

S606. In response to the ninth message, the first node may send a tenth message to the terminal.

Correspondingly, the terminal receives the tenth message from the first node.

The tenth message includes the encapsulated second early synchronization configuration. For example, the tenth message may be an SN RRC reconfiguration message, and the SN RRC reconfiguration message includes the encapsulated second early synchronization configuration.

Based on the foregoing steps, the terminal obtains the encapsulated second early synchronization configuration, and performs an early synchronization procedure for the primary secondary cell (for example, the first cell) with the second node based on a trigger request of the third node (for example, a PDCCH indication below) and the encapsulated second early synchronization configuration.

The following describes an implementation in which the terminal performs the early synchronization for the first cell with the second node.

For example, in the foregoing step S603, the third node may send a PDCCH command to the terminal based on the first early synchronization configuration, where the PDCCH command includes the random access resource #1, to be specific, the first random access preamble and/or the first random access time-frequency resource, and a resource indicated by the first early synchronization configuration includes the random access resource #1. In response to the PDCCH command, the terminal sends the first random access preamble to the second node based on the first random access time-frequency resource and the second early synchronization configuration, to complete the early synchronization.

Correspondingly, after receiving the random access preamble, the second node may determine, based on the random access preamble, a TA of the first cell and determine that the random access preamble is associated with the first identification information. For example, the second node may calculate the TA value of the terminal based on receiving time of the random access preamble. That is, the TA of the first cell is determined in the early synchronization procedure for the first cell.

Optionally, after the terminal performs the early synchronization procedure for the first cell with the second node, the second node may send, to the terminal, the TA of the first cell determined in the early synchronization procedure for the first cell, so that the terminal subsequently may access the first cell in a random access-less (RACH-less) manner, thereby reducing random access latency. That is, the method 600 further includes the following steps S607 to S609.

S607. The second node may send a fifth message to the first node.

Correspondingly, the first node receives the fifth message from the second node.

For example, the fifth message may be a 1st TA INFORMATION TRANSFER message.

The fifth message includes the TA of the first cell, the identifier of the third node, and the first identification information. It should be noted that the TA of the first cell is associated with the first identification information, and the TA of the first cell is associated with the identifier of the third node.

It should be understood that the TA of the first cell is determined during the early synchronization for the first cell between the second node and the terminal. That is, the terminal may access the first cell in a random access-less manner based on the TA when receiving a cell switch command, thereby reducing random access latency.

S608. The first node sends a sixth message to the third node in response to the fifth message. Correspondingly, the third node receives the sixth message from the first node.

For example, the sixth message may be a 2nd TA INFORMATION TRANSFER message.

The sixth message includes the TA of the first cell and the first identification information.

In an implementation, the first node sends the TA of the first cell and the first identification information to the third node based on the identifier of the third node carried in the fifth message.

S609. The third node determines, based on the sixth message, that the TA of the first cell is associated with the terminal, and then sends the TA of the first cell to the terminal.

In an implementation, the third node determines the corresponding first early synchronization configuration based on the first identification information in the sixth message, where the first early synchronization configuration is previously used for early synchronization of the terminal, and further determines the terminal associated with the TA of the first cell. The first early synchronization configuration may include a plurality of random access preamble indexes, for example, a random access preamble #1 and a random access preamble #2. Assuming that the random access preamble #1 is allocated to the terminal, the third node may determine, based on the random access preamble #1 sent by the terminal, that the first early synchronization configuration is associated with the terminal, further determine that the TA of the first cell is associated with the terminal, and send the TA of the first cell to the terminal.

Optionally, before sending the TA of the first cell to the terminal, the third node receives a measurement report reported by the terminal, and determines, based on the measurement report, to initiate a cell switch command. For example, the third node may send a switch command (for example, a cell switch command MAC CE) to the terminal by using a MAC CE. The switch command instructs to switch the primary secondary cell of the terminal to the first cell, and the switch command includes the TA of the first cell and an identity (for example, an LTM configuration identity) corresponding to the first cell.

Correspondingly, the terminal may determine, based on the TA of the first cell and the identity corresponding to the first cell that are in the switch command, that early synchronization has been performed for the first cell, and further may switch to the first cell in a random access-less manner.

Optionally, after sending the switch command to the terminal, the third node may notify the second node that the switch command for the first cell has been initiated to the terminal, so that the second node can monitor whether the terminal accesses the first cell in a random access-less manner. That is, the method 600 further includes the following steps S611 and S612.

S611. The third node sends a seventh message to the first node.

Correspondingly, the first node receives the seventh message from the third node.

For example, the seventh message may be a 1st Cell Switch Notify message.

The seventh message indicates that the switch command in step S609 has been sent to the terminal.

For example, the seventh message includes the identifier of the second node and the identification information of the first cell.

Optionally, the first node determines a current MN configuration based on the identification information of the first cell. That is, different cells of the second node correspond to different MN configurations.

S612. The first node sends an eighth message to the second node in response to the seventh message.

Correspondingly, the second node receives the eighth message from the first node.

For example, the eighth message may be a 2nd Cell Switch Notify message.

The eighth message indicates that the switch command has been sent to the terminal.

For example, the eighth message includes the identification information of the first cell.

In an implementation, the first node may send the eighth message to the second node based on the identifier of the second node in the seventh message, and notify, based on an identity of the first cell in the seventh message, the second node that the switch command for the first cell has been sent to the terminal.

Correspondingly, after receiving the eighth message, the second node may monitor whether the terminal accesses the first cell in a RACH-less manner. After the second node determines that the terminal successfully accesses the first cell, it indicates that the primary secondary cell of the terminal is the first cell.

Optionally, the second node may alternatively schedule the terminal to access the first cell in a RACH-less manner, to complete switching of the primary secondary cell of the terminal.

Optionally, after completing switching to the first cell, the terminal may send an RRC reconfiguration complete message (for example, an SN reconfiguration complete message) to the second node. It should be understood that, after switching of the primary secondary cell of the terminal is completed, signaling and/or data may be transmitted between the terminal and the second node.

Based on the foregoing solution, in an LTM switching scenario, the first early synchronization configuration corresponding to the first identification information is obtained, so that the early synchronization for the first cell can be implemented, and after receiving the switch command, the terminal can access the first cell in a random access-less manner, thereby reducing switching latency of the primary secondary cell of the terminal. Before switching of the primary secondary cell of the terminal is performed, the terminal may separately perform transmission of user plane data with the first node and the third node. After switching of the primary secondary cell of the terminal is completed, the terminal may separately perform transmission of user plane data with the first node and the second node, thereby avoiding service drops or service interruption, and ensuring service experience of users.

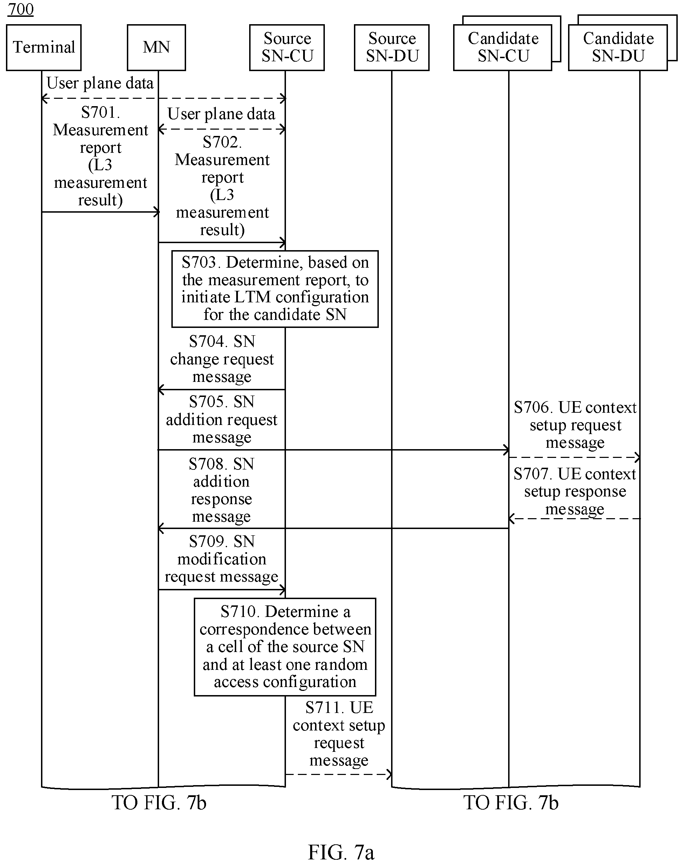

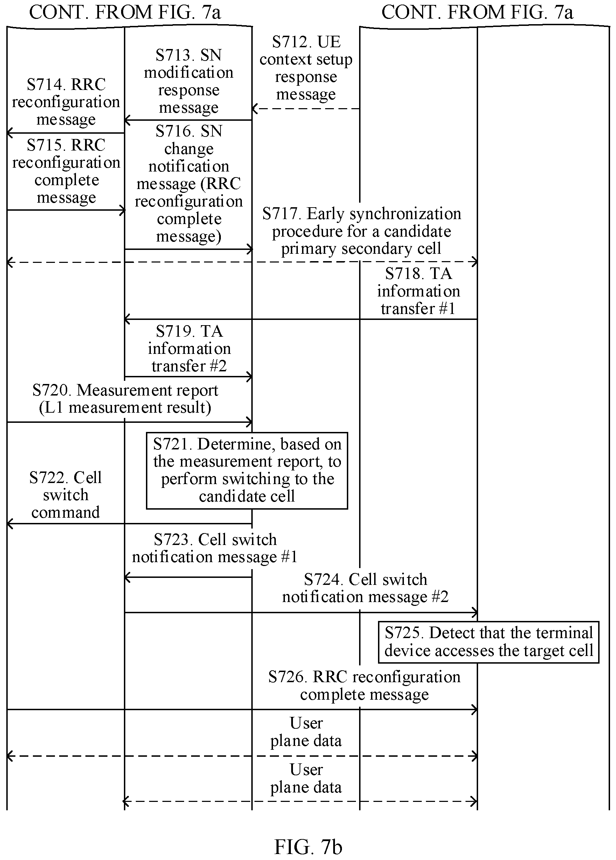

FIG. 7a and FIG. 7b are a schematic flowchart of a communication method 700 according to an embodiment of this application. As shown in FIG. 7a and FIG. 7b, an example in which a first node that is an MN, a second node that is a candidate SN (including a candidate SN-CU and a candidate SN-DU), and a third node that is a source SN (including a source SN-CU and a source SN-DU) are execution entities for description. In a DC scenario, a terminal is separately connected to the MN and the source SN, and in this case, the source SN is a secondary node that currently serves the terminal. After switching of a primary secondary cell of the terminal is completed, the terminal is separately connected to the MN and the candidate SN, and in this case, the candidate SN is a secondary node that serves the terminal. The method includes the following steps.

It should be understood that the method 700 shown in FIG. 7a and FIG. 7b may be considered as a specific implementation of the method shown in FIG. 6. Related descriptions in the embodiment shown in FIG. 6 are also applicable to this implementation. FIG. 7a, FIG. 7b, and FIG. 6 may have a same or similar technical means. Content that has been described in the embodiment shown in FIG. 6 is not described again in FIG. 7a and FIG. 7b.

S701. The terminal sends a measurement report to the MN (that is, an example of the first node).

Correspondingly, the MN receives the measurement report from the terminal.

The measurement report includes an L3 measurement result, for example, includes a measurement result of a neighboring cell (for example, a cell of the second node, including a first cell), the measurement result may indicate signal quality of the neighboring cell, and the neighboring cell is a cell (for example, the first cell) to which the terminal may switch after the terminal moves.

S702. The MN sends the measurement report to the source SN-CU (that is, an example of the third node).

Correspondingly, the source SN-CU receives the measurement report from the MN.

The measurement report includes the L3 measurement result reported by the terminal.

S703. The source SN-CU determines, based on the measurement report, to initiate LTM configuration for the candidate SN.

For example, the source SN-CU determines, based on the measurement result of the neighboring cell carried in the measurement report (for example, the measurement result indicates that the signal quality of the neighboring cell is high), to initiate the LTM configuration for the candidate SN.

S704. The source SN-CU sends an SN change request message (that is, an example of the third message) to the MN.

Correspondingly, the MN receives the SN change request message from the source SN-CU.

For example, the SN change request message may be an SN CHANGE REQUIRED message, and is used to trigger the MN to request the candidate SN to be added as a candidate secondary node of the terminal. For specific explanations of "used to trigger", refer to related descriptions in the method 600.

For example, the SN change request message may include an identifier of the candidate SN (for example, Global NG-RAN Node ID) and at least one piece of RA identification information (for example, RA identification information #1, for example, a RACH ID 1). For specific explanations, refer to related descriptions in steps S630 and S640 in the method 600.

Optionally, the SN change request message may further include one or more of the following: an identifier of the source SN, LTM information #1 (that is, an example of the second indication information), or identification information of K recommended cells (for example, a cell A and a cell B). For specific explanations, refer to related descriptions in steps S630 and S640 in the method 600.

It should be noted that, the foregoing step may be that the source SN-CU determines the third message and sends the third message to the MN, to trigger the MN to request the candidate SN to be added as the candidate secondary node of the terminal. That is, the following step S705 is performed.

Optionally, the MN may autonomously request the candidate SN to be added as the candidate secondary node of the terminal. For example, the MN receives the measurement report reported by the terminal, and determines, based on the measurement report, to request to add the candidate SN as the candidate secondary node of the terminal. That is, the following step S705 is performed.

Optionally, the source SN-CU may allocate different RA identification information based on different source SN-DUs. For example, if one DU corresponds to one piece of RA identification information, one or more cells served by the DU may correspond to the piece of RA identification information. Because the piece of RA identification information corresponds to one or more early synchronization configurations, the one or more early synchronization configurations may be associated with the one or more cells. For example, one cell may correspond to one early synchronization configuration, that is, one cell corresponds to one random access resource, and early synchronization configurations corresponding to different cells may be the same or may be different. That is, random access resources corresponding to different cells may be the same or may be different. For another example, one or more cells served by a plurality of DUs may alternatively correspond to one piece of RA identification information, and the piece of RA identification information may correspond to one or more early synchronization configurations. In this case, the one or more cells served by the plurality of DUs may correspond to the one or more early synchronization configurations, that is, the one or more cells served by the plurality of DUs correspond to one or more random access resources, and random access resources corresponding to different cells may be the same or may be different.

S705. The MN sends an SN addition request message (that is, an example of the first message) to the candidate SN-CU (that is, an example of the second node).

Correspondingly, the candidate SN-CU receives the SN addition request message from the MN.

For example, the SN addition request message may be an SN ADDITION REQUEST message, and is used to request to add the candidate SN as the candidate secondary node of the terminal.

For example, the SN addition request message may include at least one piece of RA identification information, and is used to request an early synchronization configuration for the at least one piece of RA identification information.

Optionally, the SN addition request message may further include one or more of the following: LTM information #2 (that is, an example of the first indication information), the identification information of the K cells (for example, the cell A and the cell B), the identifier of the source SN node, or an identifier of the MN. For specific explanations, refer to related descriptions in step S610 in the method 600.

Optionally, in a CU-DU split architecture of the candidate SN, the method 700 further includes the following steps S706 and S707.

S706. The candidate SN-CU sends a UE context setup request message to the candidate SN-DU.

Correspondingly, the candidate SN-DU receives the UE context setup request message from the candidate SN-DU.

The UE context setup request message is used to request the candidate SN-DU to set up an LTM UE context.

For example, the UE context setup request message may include one or more of the following: the at least one piece of RA identification information (for example, the RACH ID 1), the LTM information #2, the identification information (for example, Cell A ID) of the K recommended cells, or the identifier of the MN. For specific explanations, refer to related descriptions in step S610 in the method 600.

S707. The candidate SN-DU sends a UE context setup response message to the candidate SN-CU.

Correspondingly, the candidate SN-CU receives the UE context setup response message from the candidate SN-DU.

For example, after receiving the UE context setup request message, the candidate SN-DU determines whether to accept the K recommended or suggested cells as candidate primary secondary cells of the terminal. If the candidate SN-DU accepts the request message, the candidate SN-DU sends the UE context setup response message to the candidate SN-CU.

The UE context setup response message may include a CFRA configuration. The CFRA configuration may be a CFRA configuration of one or more candidate cells (for example, the cell A, that is, an example of the first cell) accepted by the candidate SN. The CFRA configuration includes at least one random access configuration (for example, a random access configuration #1, that is, an example of the first early synchronization configuration), and the at least one random access configuration is a random access configuration for a same candidate primary secondary cell. For example, if the candidate SN accepts the cell A as the candidate primary secondary cell of the terminal, the random access configuration #1 is a random access configuration of the cell A, and is used by the terminal to access the cell A by using a random access resource indicated by the random access configuration #1.

It should be understood that there is a correspondence between the at least one random access configuration and the at least one piece of RA identification information. One RA identifier may correspond to one random access configuration. For example, the RACH ID 1 corresponds to a RACH Config 1, and a RACH ID 2 corresponds to a RACH Config 2. Alternatively, one RA identifier may correspond to a plurality of random access configurations. For example, the RACH ID 1 corresponds to a RACH Config 1 and a RACH Config 2. This is not limited in this application.

It should be further understood that, when there are a plurality of candidate primary secondary cells (for example, the cell A and the cell B) accepted by the candidate SN, the CFRA configuration includes a random access configuration of the cell A and a random access configuration of the cell B. That is, different candidate primary secondary cells correspond to respective random access configurations.

For example, the random access configuration #1 (for example, a random access channel configuration RACH config 1, where the RACH config 1 corresponds to the RACH ID 1) indicates a random access resource, and the random access resource includes one or more of the following:

### (1) a random access preamble index (preamble index)

For example, the random access preamble index may be at least one SSB index (index) for the candidate primary secondary cell (for example, the cell A), and/or a contention-free random access preamble index corresponding to the SSB index. In a random access procedure, the terminal may send a random access preamble to the second node based on the random access preamble index, to implement early uplink synchronization.

### (2) a random access time-frequency resource

For example, the random access resource includes at least one of random access root sequence information, random access window information, or contention resolution timer information. In a random access procedure, the terminal may send a random access preamble to the candidate SN-CU by using the random access time-frequency resource, to implement early uplink synchronization.

It should be understood that the candidate SN-CU may allocate respective early synchronization configurations to different candidate primary secondary cells. Different early synchronization configurations indicate corresponding random access resources, and are used by the terminal to perform early synchronization for the corresponding candidate primary secondary cells by using the random access resources.

Optionally, the random access resources indicated by different early synchronization configurations may be the same or may be different. This is not limited in this application.

S708. The candidate SN-CU sends an SN addition response message (that is, an example of the second message) to the MN.

Correspondingly, the MN receives the SN addition response message from the candidate SN-CU.

The SN addition response message may be an SN ADDITION REQUEST ACKNOWLEDGE message, and is used to acknowledge addition of the candidate SN as the candidate secondary node of the UE.

The SN addition response message includes at least one random access configuration (for example, the random access configuration #1, that is, the first early synchronization configuration). It should be noted that the random access configuration #1 is allocated by the candidate SN to the source SN, and is used for early synchronization of the UE. For a process in which the source SN triggers, based on the early synchronization configuration #1 and via a cell of the source SN, early synchronization for the candidate primary secondary cell (for example, the cell A) to the terminal, refer to related descriptions of step S603 in the method 600.

Optionally, different early synchronization configurations corresponding to different identification information indicate different random access resources.

For example, the random access configuration #1 indicates a random access resource #1, for example, includes one or more of the random access preamble index, the random access time-frequency resource, the random access root sequence information, the random access window information, or the contention resolution timer information. For specific explanations, refer to related descriptions in the method 600. It should be understood that random access resources indicated by different random access configurations may be the same or may be different.

Optionally, the SN addition response message may further include one or more of the following: the identifier of the source SN, a random access configuration #2 (that is, an example of the second early synchronization configuration), identification information of the candidate primary secondary cell (for example, the cell A) accepted by the candidate SN-CU, or a lower-layer RRC configuration (for example, at least one of a TCI state configuration, a random access channel RACH configuration, or a CSI report configuration) corresponding to the accepted candidate primary secondary cell. For specific explanations, refer to related descriptions in step S620 in the method 600.

Optionally, based on the foregoing step S708, the MN may send the obtained random access configuration #1 to the source SN. That is, the method may further include the following step S709.

S709. The MN sends an SN modification request message (that is, an example of the fourth message) to the source SN-CU.

Correspondingly, the source SN-CU receives the SN modification request message from the MN.

The SN modification request message may be an SN MODIFICATION REQUEST message, and includes at least one random access configuration (for example, the random access configuration #1) and at least one piece of RA identification information (for example, the RA identification information #1) corresponding to the at least one random access configuration. The random access configuration #1 indicates the random access resource #1.

Optionally, the SN modification request message further includes the random access configuration #2 indicating a random access resource #2. It should be noted that the random access configuration #2 is allocated by the candidate SN to the terminal, and is used for early synchronization of the terminal.

Optionally, the SN modification request message further includes the random access configuration #2 and RA identification information corresponding to the random access configuration #2, for example, the RA identification information #1.

S710. The source SN-CU determines a correspondence between the cell of the source SN and the at least one random access configuration.

For example, the source SN determines a correspondence between the cell (including a current serving cell) of the source SN and the at least one random access configuration delivered by the candidate SN. For example, the source SN includes a cell C and a cell D, where the cell C corresponds to the random access configuration #1 (for example, the RACH config 1), and the cell D corresponds to the random access configuration 2 (for example, the RACH config 2). It should be understood that the correspondence determined by the source SN-CU in this step is used by the source SN-CU to subsequently send a TA of the candidate primary secondary cell (for example, the cell A) to the terminal.

Optionally, in a CU-DU split architecture of the source SN, the method 700 further includes the following steps S711 and S712.

S711. The source SN-CU sends a UE context setup request message to the source SN-DU.

Correspondingly, the source SN-DU receives the UE context setup request message from the source SN-CU.

The UE context setup request message is used to request the source SN-DU to set up an LTM UE context.

For example, the UE context setup request message may include one or more of the following: the at least one piece of RA identification information (for example, the RACH ID 1), the at least one random access configuration (for example, the random access configuration #1), the identification information of the candidate primary secondary cell (for example, the cell A), or a random access configuration #3. For specific explanations, refer to related descriptions in the method 600.

S712. The source SN-DU sends a UE context setup response message to the source SN-CU.

Correspondingly, the source SN-CU receives the UE context setup response message from the source SN-DU.

Optionally, if the SN modification request message in step S709 carries the random access configuration #2, the method 700 further includes the following steps S713 to S716.

S713. The source SN-CU sends an SN modification response message (that is, an example of the ninth message) to the MN.

Correspondingly, the MN receives the SN modification response message from the source SN-CU.

The SN modification response message includes the encapsulated random access configuration #2. For example, the SN modification response message may be an SN MODIFICATION REQUEST ACKNOWLEDGE message.

For example, the source SN performs encapsulation based on a format of the SN, for example, encapsulates the random access configuration #2 into an SN RRC Reconfiguration message, and sends the encapsulated random access configuration #2 to the MN. The encapsulated random access configuration #2 is used by the terminal to perform the early synchronization for the candidate primary secondary cells (for example, the cell A).

S714. The MN sends an RRC reconfiguration message (that is, an example of the tenth message) to the terminal.

Correspondingly, the terminal receives the RRC reconfiguration message from the MN.

The RRC reconfiguration message may be an RRC reconfiguration message, and includes the encapsulated random access configuration #3.

S715. The terminal sends an RRC reconfiguration complete message to the MN.

Correspondingly, the MN receives the RRC reconfiguration complete message from the terminal.

S716. The MN sends an SN change notification message to the source SN-CU.

Correspondingly, the source SN-CU receives the SN change notification message from the MN.

The SN change notification message includes the RRC reconfiguration complete message.

S717. The terminal and the candidate SN-CU perform an early synchronization procedure for the candidate primary secondary cell (for example, the cell A).

The early synchronization includes early uplink synchronization or early downlink synchronization. Based on the foregoing steps, the terminal obtains the encapsulated early synchronization configuration #2, and may perform the early synchronization procedure for the primary secondary cell (for example, the first cell) with the candidate SN based on a trigger request of the source SN (for example, the source SN sends a PDCCH indication to the UE) and the encapsulated early synchronization configuration #2. For a process in which the terminal and the candidate SN perform the early synchronization for the candidate primary secondary cell (for example, the cell A), refer to related descriptions of step S606 in the method 600. Details are not described herein again.

It should be understood that, in a process of performing the early synchronization, the candidate SN-CU determines the TA of the candidate primary secondary cell (for example, the cell A). In this case, the candidate SN-CU cannot determine a terminal corresponding to the TA.

Optionally, after the early synchronization procedure for the candidate primary secondary cell (for example, the cell A) performed by the terminal and the candidate SN, the candidate SN needs to send the TA of the candidate primary secondary cell determined in the early synchronization procedure for the candidate primary secondary cell (for example, the cell A), so that the terminal can subsequently access the candidate primary secondary cell (for example, the cell A) in a random access-less (RACH-less) manner, thereby reducing random access latency. That is, the method 700 further includes the following step S718. To be specific, the candidate SN sends the TA of the candidate primary secondary cell to the MN, and then the MN sends the TA to the source SN, so that the source SN may send the TA of the candidate primary secondary cell to the terminal when determining that the terminal performs cell switching.

S718. The candidate SN-CU sends a TA information transfer message #1 (that is, an example of the fifth message) to the MN.

Correspondingly, the MN receives the TA information transfer message #1 from the candidate SN-CU. For example, the TA information transfer message #1 may be a 1st TA INFORMATION TRANSFER message.

The TA information transfer message #1 includes: the TA of the candidate primary secondary cell (that is, the first cell, for example, the cell A), the identifier of the source SN, and the at least one piece of RA identification information (for example, the RA identification information #1). For specific explanations, refer to related descriptions in step S607 in the method 600.

Optionally, the TA information transfer message #1 may further include: the identification information of the candidate primary secondary cell and/or random access information of the random access preamble (for example, index information and a radio access network temporary identifier (radio access network temporary identifier, RA-RNTI) that are of the random access preamble, where the RA-RNTI is determined based on the time-frequency resource of the random access preamble).

It should be noted that the TA of the candidate primary secondary cell is associated with the RA identification information #1, and the TA of the candidate primary secondary cell is associated with the identifier of the source SN. It should be understood that the TA of the candidate primary secondary cell is determined during the early synchronization for the candidate primary secondary cell between the candidate SN node and the terminal. That is, the terminal may access the candidate primary secondary cell in a random access-less manner based on the TA when receiving a cell switch command, thereby reducing random access latency.

S719. The MN sends a TA information transfer message #2 (that is, an example of the sixth message) to the source SN-CU.

Correspondingly, the candidate SN-CU receives the TA information transfer message #2 from the MN. For example, the TA information transfer message #2 may be a 2nd TA INFORMATION TRANSFER message.

The TA information transfer message #2 includes: the TA of the candidate primary secondary cell (for example, the cell A) and the at least one piece of RA identification information (for example, the RA identification information #1). For specific explanations, refer to related descriptions in step S608 in the method 600.

Optionally, the TA information transfer message #2 may further include: the identification information of the candidate primary secondary cell and/or the random access information of the random access preamble (for example, the index information and the RA-RNTI that are of the random access preamble).

Further, the source SN-CU may determine, based on the TA information transfer message #2, that the TA of the candidate primary secondary cell (for example, the cell A) is associated with the terminal, and further send the TA of the candidate primary secondary cell (for example, the cell A) to the terminal. For a specific implementation, refer to related descriptions of step S609 in the method 600.

S720. The terminal sends a measurement report to the source SN-CU.

Correspondingly, the source SN-CU receives the measurement report from the terminal.

The measurement report includes an L1 measurement result, and the L1 measurement result includes a measurement result of the candidate primary secondary cell (for example, the cell A).

S721. The source SN-CU determines, based on the measurement report, to perform switching to the candidate primary secondary cell.

For example, the source SN-CU determines, based on the measurement result of the candidate primary secondary cell (for example, the cell A), that signal quality of the candidate primary secondary cell (for example, the cell A) is better, and then determines, based on the TA of the candidate primary secondary cell (for example, the cell A), to trigger the terminal to perform RACH-less cell switch command MAC CE.

S722. The source SN-CU sends a cell switch command to the terminal.

Correspondingly, the terminal receives the cell switch command from the source SN-CU.

In an implementation, the source SN-CU sends a cell switch command MAC CE to the terminal, where the MAC control element (MAC control element, MAC CE) indicates the terminal to switch to the candidate primary secondary cell (for example, the cell A) in a RACH-less (RACH-less) manner.

For example, the MAC CE message may carry one or more of the following: the TA of the candidate primary secondary cell (for example, the cell A), an identity of the candidate primary secondary cell (for example, the cell A), or beam information (for example, a TCI state identity) of the candidate primary secondary cell (for example, the cell A). The beam information is used by the terminal to receive downlink control information in a RACH-less manner, and the TA of the candidate primary secondary cell indicates the terminal to initiate RACH-less cell switching for the candidate primary secondary cell (for example, the cell A), to reduce cell switching latency.

Optionally, after the source SN sends the switch command to the terminal, the source SN may notify the candidate SN that the switch command for the candidate primary secondary cell (for example, the cell A) has been initiated to the terminal, so that the candidate SN may monitor that the terminal accesses the candidate primary secondary cell (for example, the cell A) in a random access-less manner. That is, the method 700 further includes the following step S723.

S723. The source SN-CU sends a cell switch notification message #1 (that is, an example of the seventh message) to the MN.

Correspondingly, the MN receives the cell switch notification message #1 from the source SN-CU.

The cell switch notification message #1 indicates that the cell switch command has been sent to the terminal, and the cell switch notification message #1 may be a Cell Switch Notify message.

For example, the cell switch notification message #1 includes the identification information of the candidate primary secondary cell (for example, the cell A) and the identifier of the candidate SN. Optionally, the MN may determine a current MN configuration based on the identification information of the candidate primary secondary cell (for example, the cell A). That is, different cells of the candidate SN correspond to different MN configurations.

Optionally, the cell switch notification message #1 may further include information about the TCI state identity of the candidate primary secondary cell (for example, the cell A).

S724. The MN sends a cell switch notification message #2 (that is, an example of the eighth message) to the candidate SN-CU.

Correspondingly, the candidate SN-CU receives the cell switch notification message #2 from the MN.

The cell switch notification message #2 indicates that the cell switch command has been sent to the terminal, and the cell switch notification message #2 may be a Cell Switch Notify message.

For example, the cell switch notification message #2 includes the identification information of the candidate primary secondary cell (for example, the cell A).

Optionally, the cell switch notification message #2 may further include the information about the TCI state identity of the candidate cell PSCell (for example, the cell A).

S725. The candidate SN-CU detects that the terminal accesses the target cell.

For example, after receiving the cell switch notification message #2, the candidate SN-CU monitors whether the terminal accesses the candidate primary secondary cell (for example, the cell A) in a RACH-less manner. After the terminal successfully accesses the candidate primary secondary cell (for example, the cell A), it indicates that the primary secondary cell of the terminal is the candidate primary secondary cell (for example, the cell A).

S726. The terminal sends an RRC reconfiguration complete message to the candidate SN-CU.

Correspondingly, the candidate SN-CU receives the RRC reconfiguration complete message from the terminal, for example, an RRC reconfiguration complete message.

It should be understood that, after switching to the candidate primary secondary cell (for example, the cell A) is completed, the candidate SN-CU may send user plane data to the terminal. In an example, the candidate SN-DU sends the user plane data to the candidate SN-CU, the candidate SN-CU sends the user plane data to the MN, and the MN sends the user plane data to the terminal.

Based on the foregoing solution, in an LTM switching scenario, the random access configuration corresponding to the RA identification information is obtained, so that the early synchronization for the candidate primary secondary cell can be implemented, and after receiving the cell switch command, the terminal can access the candidate primary secondary cell in a random access-less manner, thereby reducing switching latency of the primary secondary cell of the terminal. Before switching of the primary secondary cell of the terminal is performed, the terminal may separately perform transmission of user plane data with the MN and the source SN. After switching of the primary secondary cell of the terminal is completed, the terminal may separately perform, by using the TA of the candidate primary secondary cell obtained in advance, transmission of user plane data with the MN and the candidate SN, thereby avoiding service drops or service interruption, and ensuring service experience of users.

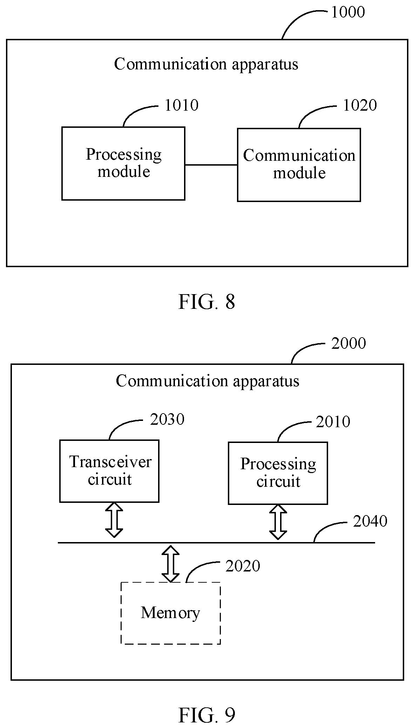

The foregoing describes in detail embodiments on a communication method side of this application with reference to FIG. 1 to FIG. 7b. The following describes in detail embodiments on a communication apparatus side of this application with reference to FIG. 8 and FIG. 9. It should be understood that descriptions of the apparatus embodiments correspond to the descriptions of the method embodiments, and therefore, for a part that is not described in detail, refer to the foregoing method embodiments.

FIG. 8 is a diagram of a communication apparatus according to an embodiment of this application. As shown in FIG. 8, the communication apparatus 1000 includes a processing module 1010 and a communication module 1020. The communication apparatus 1000 may be a terminal side, for example, a terminal, or may be a communication apparatus, for example, a chip, a chip system, or a circuit, that is used in a terminal or that is used together with a terminal and that can implement a method performed by the terminal. Alternatively, the communication apparatus 1000 may be a network side, for example, a network device (which may be a first node, a second node, or a third node), or may be a communication apparatus, for example, a chip, a chip system, a circuit, a DU, or a CU, that is used in a network device or used together with a network device and that can implement a method performed by the network device.

The communication module 1020 may also be referred to as a transceiver module, a transceiver, a transceiver machine, a transceiver unit, a transceiver apparatus, or the like. The processing module 1010 may also be referred to as a processor, a processing board, a processing unit, a processing apparatus, or the like. Optionally, the communication module 1020 is configured to perform a sending operation and a receiving operation of the first node, the second node, the third node, or the terminal in the foregoing method. A device that is in the communication module 1020 and that is configured to implement a receiving function may be considered as a receiving unit, and a device that is in the communication module 1020 and that is configured to implement a sending function may be considered as a sending unit. That is, the communication module 1020 includes the receiving unit and/or the sending unit. Optionally, the processing module 1010 is configured to implement a processing function of the first node, the second node, the third node, or the terminal in the foregoing method.

For example, the communication module 1020 is configured to send a first message to the second node, where the first message is used to request to add the second node as a candidate secondary node of the terminal, the first message includes first identification information, and the first identification information is used to request an early synchronization configuration from the second node; and the communication module 1020 is further configured to receive a second message from the second node, where the second message is used to acknowledge addition of the second node as the candidate secondary node of the terminal, the second message includes a first early synchronization configuration, and the first early synchronization configuration corresponds to the first identification information.

For example, the communication module 1020 is configured to receive a first message from the first node, where the first message is used to request to add the second node as a candidate secondary node of the terminal, the first message includes first identification information, and the first identification information is used to request an early synchronization configuration; and the communication module 1020 is further configured to send a second message to the first node, where the second message is used to acknowledge addition of the second node as the candidate secondary node of the terminal, the second message includes a first early synchronization configuration, and the first early synchronization configuration corresponds to the first identification information.

For example, the processing module 1010 is configured to determine a third message, where the third message includes an identifier of the second node and first identification information, and the third message is used to trigger the first node to request, from the second node, an early synchronization configuration for the first identification information; and the communication module 1020 is configured to send the third message to the first node.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

Division into modules in this application is an example and is merely logical function division, and there may be other division manners during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 9 is a diagram of another communication apparatus according to an embodiment of this application. As shown in FIG. 9, optionally, the communication apparatus 2000 may be the first node, the second node, the third node, or the terminal, or a chip, a chip system, or a circuit used in the first node, the second node, the third node, or the terminal. Optionally, in this application, the chip system may include a chip, or may include a chip and another discrete device. The first node may be an MN in a DC scenario, the second node may be a candidate SN in the DC scenario, and the third node may be a source SN in the DC scenario.

The communication apparatus 2000 may be configured to implement a function of any device (for example, the first node, the second node, the third node, or the terminal) in the communication system described in the foregoing examples. The communication apparatus 2000 may include at least one processing circuit 2010. Optionally, the processing circuit 2010 is coupled to a memory. The memory may be located inside the apparatus, or the memory may be integrated with a processor, or the memory may be located outside the apparatus. For example, the communication apparatus 2000 may further include at least one memory 2020. The memory 2020 stores a computer program, a computer program or instructions, and/or data that are/is necessary for implementing any one of the foregoing examples. The processing circuit 2010 may execute the computer program stored in the memory 2020, to perform the method in any one of the foregoing examples.

The communication apparatus 2000 may further include a transceiver circuit 2030, and the communication apparatus 2000 may exchange information with another device by using the transceiver circuit 2030. For example, the transceiver circuit 2030 may be a transceiver, a circuit, a bus, a module, a pin, or another type of communication interface. When the communication apparatus 2000 is a chip-type apparatus or circuit, the transceiver circuit 2030 in the apparatus 2000 may also be an input/output circuit or an interface circuit, and may input information (or referred to as receiving information) and output information (or referred to as sending information). When the communication apparatus 2000 is a network device or a terminal, the transceiver circuit 2030 may be a transmitter, a receiver, a transceiver, or a communication interface. This is not limited herein.

The processing circuit 2010 may be one or more processors, or may be all or some processing circuits of the one or more processors. The processing circuit 2010 is an integrated processor, a microprocessor, an integrated circuit, a logic circuit, or the like, and the processor may determine output information based on input information.

The coupling in this application is an indirect coupling or a communication connection between apparatuses, units, or modules for information exchange between the apparatuses, the units, or the modules, and may be in electrical, mechanical, or other forms. The processing circuit 2010 may cooperate with the memory 2020 and the transceiver circuit 2030. A specific connection medium between the processing circuit 2010, the memory 2020, and the transceiver circuit 2030 is not limited in this application.

Optionally, as shown in FIG. 9, the processing circuit 2010, the memory 2020, and the transceiver circuit 2030 are connected to each other by using a bus 2040. Optionally, the bus may include a type of bus like an address bus, a data bus, or a control bus. In addition, for ease of representation, FIG. 9 shows one bus 2040, but this does not mean that there is only one bus or only one type of bus.

It should be understood that the processor mentioned in embodiments of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any memory of another appropriate type.

An embodiment of this application further provides a computer-readable storage medium, where the computer-readable storage medium stores computer instructions used to implement the method performed by the first node, the second node, the third node, or the terminal in the foregoing embodiments.

An embodiment of this application further provides a computer program product. The computer program product includes computer program code or instructions. When the computer program code or the instructions are executed by a computer, the method performed by the first node, the second node, the third node, or the terminal in the foregoing embodiments is implemented.

An embodiment of this application further provides a communication system. The communication system includes the first node, the second node, the third node, or the terminal in the foregoing embodiments.

For explanations and beneficial effects of related content in any one of the apparatuses provided above, refer to the corresponding method embodiments provided above. Details are not described herein again.

It should be understood that, in embodiments of this application, unless otherwise stated or there is a logical conflict, terms and/or descriptions in different embodiments are consistent and may be mutually referenced, and technical features in different embodiments may be combined based on an internal logical relationship thereof to form a new embodiment.

It should be understood that, in some of the foregoing embodiments, a device in an existing network architecture is mainly used as an example for description, and a specific form of the device is not limited in embodiments of this application. For example, all devices that can implement a same function in the future are applicable to embodiments of this application.

A person of ordinary skill in the art may be aware that, units and algorithm steps of the examples described in combination with embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. During actual implementation, there may be other division manners. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first node in a multi-connectivity scenario, and comprises:
sending a first message to a second node, wherein the first message is used to request to add the second node as a candidate secondary node of a terminal, the first message comprises first identification information, and the first identification information is used to request an early synchronization configuration from the second node; and
receiving a second message from the second node, wherein the second message is used to acknowledge addition of the second node as the candidate secondary node of the terminal, the second message comprises a first early synchronization configuration, and the first early synchronization configuration corresponds to the first identification information.

2. The method according to claim 1, wherein the sending the first message to the second node comprises:
receiving a third message from a third node, wherein the third message comprises an identifier of the second node and the first identification information, and the third node is a secondary node that currently serves the terminal; and
sending the first message to the second node in response to the third message.

3. The method according to claim 1 or 2, wherein the method further comprises:
sending a fourth message to the third node, wherein the fourth message comprises the first early synchronization configuration, and the third node is the secondary node that currently serves the terminal.

4. The method according to any one of claims 1 to 3, wherein the method further comprises:
receiving a fifth message from the second node, wherein the fifth message comprises a timing advance TA of a first cell, an identifier of the third node, and the first identification information, the first cell belongs to the second node, and the third node is the secondary node that currently serves the terminal.

5. The method according to claim 4, wherein the method further comprises:
sending a sixth message to the third node in response to the fifth message, wherein the sixth message comprises the TA of the first cell and the first identification information.

6. The method according to claim 5, wherein the method further comprises:
receiving a seventh message from the third node, wherein the seventh message indicates that a switch command has been sent to the terminal, the switch command instructs to switch a primary secondary cell of the terminal to the first cell, and the seventh message comprises the identifier of the second node and identification information of the first cell.

7. The method according to claim 6, wherein the method further comprises:
sending an eighth message to the second node in response to the seventh message, wherein the eighth message indicates that the switch command has been sent to the terminal, and the eighth message comprises the identification information of the first cell.

8. The method according to any one of claims 1 to 7, wherein the first early synchronization configuration comprises a random access preamble index and/or a random access time-frequency resource.

9. The method according to any one of claims 1 to 8, wherein the second message further comprises a second early synchronization configuration, the fourth message further comprises the second early synchronization configuration, and the method further comprises:
receiving a ninth message from the third node, wherein the ninth message comprises the encapsulated second early synchronization configuration; and
sending a tenth message to the terminal in response to the ninth message, wherein the tenth message comprises the encapsulated second early synchronization configuration, the first early synchronization configuration and the encapsulated second early synchronization configuration are used for early synchronization for the first cell, and the first cell belongs to the second node.

10. The method according to claim 9, wherein the early synchronization is a synchronization procedure performed by the terminal before receiving the switch command.

11. The method according to any one of claims 1 to 10, wherein the first message further comprises first indication information, and the first indication information is used to request, for LTM, to add the second node as the candidate secondary node of the terminal.

12. The method according to any one of claims 1 to 11, wherein the third message further comprises second indication information, and the second indication information is used to trigger, for LTM, the first node to request to add the second node as the candidate secondary node of the terminal.

13. The method according to any one of claims 1 to 12, wherein the first message further comprises identification information of K recommended cells, the K cells comprise the first cell, K is an integer greater than or equal to 1, and the first cell belongs to the second node.

14. The method according to claim 13, wherein the third message further comprises the identification information of the K cells.

15. The method according to any one of claims 1 to 14, wherein the first message further comprises second identification information, the second identification information is used to request an early synchronization configuration from the second node, the second message further comprises a third early synchronization configuration, and the third early synchronization configuration corresponds to the second identification information.

16. A communication method, wherein the method is applied to a second node in a multi-connectivity scenario, and comprises:
receiving a first message from a first node, wherein the first message is used to request to add the second node as a candidate secondary node of a terminal, the first message comprises first identification information, and the first identification information is used to request an early synchronization configuration; and
sending a second message to the first node, wherein the second message is used to acknowledge addition of the second node as the candidate secondary node of the terminal, the second message comprises a first early synchronization configuration, and the first early synchronization configuration corresponds to the first identification information.

17. The method according to claim 16, wherein the method further comprises:
sending a fifth message to the first node, wherein the fifth message comprises a timing advance TA of a first cell, an identifier of the third node, and the first identification information, the first cell belongs to the second node, and the TA is determined in an early synchronization procedure for the first cell.

18. The method according to claim 17, wherein the method further comprises:
receiving an eighth message from the first node, wherein the eighth message indicates that a switch command has been sent to the terminal, the switch command instructs to switch a primary secondary cell of the terminal to the first cell, and the eighth message comprises identification information of the first cell.

19. The method according to any one of claims 16 to 18, wherein the first early synchronization configuration comprises a random access preamble index and/or a random access time-frequency resource.

20. The method according to any one of claims 16 to 19, wherein the first message further comprises first indication information, and the first indication information is used to request, for LTM, to add the second node as the candidate secondary node of the terminal.

21. The method according to any one of claims 16 to 20, wherein the first message further comprises identification information of K recommended cells, the K cells comprise the first cell, the first cell belongs to the second node, and K is an integer greater than or equal to 1.

22. A communication method, wherein the method is applied to a third node in a multi-connectivity scenario, the third node is a secondary node that currently serves a terminal, and the method comprises:
determining a third message, wherein the third message comprises an identifier of a second node and first identification information, and the third message is used to trigger a first node to request, from the second node, an early synchronization configuration for the first identification information; and
sending the third message to the first node.

23. The method according to claim 22, wherein the method further comprises:
receiving a fourth message from the first node, wherein the fourth message comprises a first early synchronization configuration, and the first early synchronization configuration corresponds to the first identification information; and
indicating, based on the first early synchronization configuration and via a second cell, the terminal to initiate early synchronization for a first cell, wherein the first early synchronization configuration is a configuration of the first cell, the first cell belongs to the second node, and the second cell belongs to the third node.

24. The method according to claim 23, wherein the first early synchronization configuration is associated with the second cell.

25. The method according to claim 23 or 24, wherein the fourth message further comprises a second early synchronization configuration, and the method further comprises:
sending a ninth message to the first node in response to the fourth message, wherein the ninth message comprises the encapsulated second early synchronization configuration, and the encapsulated second early synchronization configuration is used for the early synchronization for the first cell.

26. The method according to any one of claims 23 to 25, wherein the method further comprises:
receiving a sixth message from the first node, wherein the sixth message comprises a timing advance TA of the first cell and the first identification information.

27. The method according to claim 26, wherein the method further comprises:
determining, based on the sixth message, that the TA of the first cell is associated with the terminal; and
sending a switch command to the terminal, wherein the switch command instructs to switch a primary secondary cell of the terminal to the first cell, and the switch command comprises the TA of the first cell.

28. The method according to claim 27, wherein the method further comprises:
sending a seventh message to the first node, wherein the seventh message indicates that the switch command has been sent to the terminal, and the seventh message comprises the identifier of the second node and identification information of the first cell.

29. The method according to any one of claims 22 to 28, wherein the third message further comprises second indication information, and the second indication information is used to trigger, for LTM, the first node to request to add the second node as the candidate secondary node of the terminal.

30. The method according to any one of claims 22 to 29, wherein the third message further comprises identification information of K recommended cells, the K cells comprise the first cell, the first cell belongs to the second node, and K is an integer greater than or equal to 1.

31. A communication apparatus, comprising a module or a unit configured to perform the method according to any one of claims 1 to 15, a module or a unit configured to perform the method according to any one of claims 16 to 21, or a module or a unit configured to perform the method according to any one of claims 22 to 30.

32. A communication apparatus, wherein the communication apparatus comprises at least one processor; and the at least one processor is configured to execute a computer program or instructions, to cause the communication apparatus to perform the method according to any one of claims 1 to 15, 16 to 21, or 22 to 30.

33. The communication apparatus according to claim 32, wherein
the communication apparatus further comprises a memory, and the memory is configured to store the computer program or the instructions; and/or
the communication apparatus further comprises a communication interface, the communication interface is coupled to the at least one processor, and the communication interface is used by the communication apparatus to exchange information with another communication apparatus.

34. The communication apparatus according to claim 32 or 33, wherein the communication apparatus is a chip or a chip system.

35. A communication system, comprising at least one of a first node, a second node, or a third node, wherein the first node is configured to perform the method according to any one of claims 1 to 15, the second node is configured to perform the method according to any one of claims 16 to 21, and the third node is configured to perform the method according to any one of claims 22 to 30.

36. A computer-readable storage medium, wherein the computer-readable storage medium stores program code or instructions to be executed by a device, and when the program code or the instructions are executed, the method according to any one of claims 1 to 30 is performed.

37. A computer program product, comprising instructions, wherein when the instructions are run on a computer, the method according to any one of claims 1 to 30 is performed.
